(19) Europäisches Patentamt
European Patent Office
Office européen des brevets

(11) EP 4 475 147 A1

# (12) EUROPEAN PATENT APPLICATION
published in accordance with Art. 153(4) EPC

(43) Date of publication:
**11.12.2024 Bulletin 2024/50**

(21) Application number: **23746714.7**

(22) Date of filing: **16.01.2023**

(51) International Patent Classification (IPC):
***H01F 1/28*** (2006.01) ***B01F 23/57*** (2022.01)
***B01F 27/80*** (2022.01) ***B01F 27/90*** (2022.01)
***B01F 27/91*** (2022.01) ***C08J 3/215*** (2006.01)
***C08K 3/01*** (2018.01) ***C08K 3/08*** (2006.01)
***C08K 3/10*** (2018.01) ***C08K 3/22*** (2006.01)
***C08L 63/00*** (2006.01) ***C08L 71/02*** (2006.01)
***C08L 101/00*** (2006.01) ***H01F 1/37*** (2006.01)

(52) Cooperative Patent Classification (CPC):
**B01F 23/57; B01F 27/80; B01F 27/90; B01F 27/91; C08J 3/215; C08K 3/01; C08K 3/08; C08K 3/10; C08K 3/22; C08L 63/00; C08L 71/02; C08L 101/00; H01F 1/28; H01F 1/37**

(86) International application number:
**PCT/JP2023/000906**

(87) International publication number:
**WO 2023/145500 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2022 JP 2022012682**

(71) Applicant: **FUJIFILM Corporation**
**Tokyo 106-8620 (JP)**

(72) Inventors:
- **ISHIKAWA Tatsuo**
  **Haibara-gun, Shizuoka 421-0396 (JP)**
- **MIYATA Tetsushi**
  **Haibara-gun, Shizuoka 421-0396 (JP)**

(74) Representative: **HGF**
**HGF Limited**
**1 City Walk**
**Leeds LS11 9DX (GB)**

## (54) METHOD FOR PRODUCING COMPOSITION, MAGNETIC MATERIAL AND ELECTRONIC COMPONENT

(57) The present invention provides a method for producing a composition, with which a composition capable of forming a magnetic material exhibiting high magnetic permeability and low magnetic loss, and having excellent storage stability can be produced; a magnetic material; and an electronic component. The method for producing a composition of the present invention includes a step of obtaining a composition by supplying, to a mixing device, magnetic particles, an organic solvent, and a rheology control agent to be stirred and mixed, in which a content of the magnetic particles is 80% to 95% by mass with respect to a total mass of components supplied to the mixing device, a stirring circumferential speed during the stirring and mixing is 2.0 to 5.0 m/sec, a viscosity of the composition, which is measured under a condition of a temperature of 25°C and a shear rate of 0.1 $sec^{-1}$, is 0.5 to 500 Pa·s, and a viscosity of the composition, which is measured under a condition of a temperature of 25°C and a shear rate of 10 $sec^{-1}$, is 0.01 to 100 Pa s.

EP 4 475 147 A1

FIG. 1

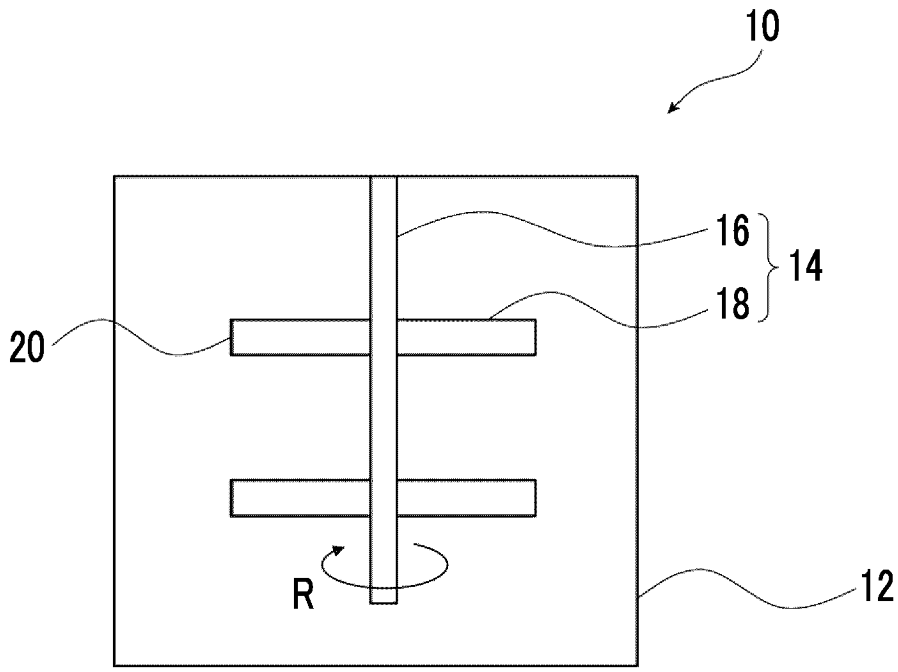

## Description

### BACKGROUND OF THE INVENTION

1. Field of the Invention

The present invention relates to a method for producing a composition, a magnetic material, and an electronic component.

2. Description of the Related Art

With performance enhancement and miniaturization of electronic devices, a degree of integration of electronic circuits is increasing. As one of materials for improving the degree of integration, there is a composition containing magnetic particles. Since a magnetic material can be mounted in any shape by using such a composition, the miniaturization and the performance enhancement of the electronic devices are easily achieved as compared with a method in the related art, in which an individual piece of the magnetic material is disposed on a chip.

For example, JP2017-043749A discloses a composition containing a predetermined magnetic powder. In JP2017-043749A, the content of the magnetic powder is high as 80% to 93% by mass.

### SUMMARY OF THE INVENTION

In recent years, there has been a demand for further improving magnetic permeability and further reducing magnetic loss with respect to a magnetic material formed of a composition containing magnetic particles.

Furthermore, in the composition containing magnetic particles, it is required that a change in properties of the composition, in which the magnetic particles and a solvent are separated from each other, is suppressed even in a case where the composition is stored, or an original state in which the magnetic particles and the solvent are not separated is restored by stirring even in a case where the magnetic particles and the solvent are separated from each other. In the present specification, it is described that, in a case where the change in properties of the composition, such as the separation of the magnetic particles and the solvent, is suppressed, or in a case where the magnetic particles and the solvent are separated but the original state without separation is restored by stirring, the storage stability of the composition is excellent.

In the composition of the related art, in which the content of the magnetic particles is high, it is difficult to satisfy the above-described characteristics.

An object of the present invention is to provide a method for producing a composition, with which a composition capable of forming a magnetic material exhibiting high magnetic permeability and low magnetic loss, and having excellent storage stability can be produced.

Another object of the present invention is to provide a magnetic material and an electronic component.

As a result of conducting an extensive investigation to achieve the objects, the present inventor has found that the objects can be achieved by the following constitution.

(1) A method for producing a composition, comprising:

a step of obtaining a composition by supplying, to a mixing device, magnetic particles, an organic solvent, and a rheology control agent to be stirred and mixed,
in which a content of the magnetic particles is 80% to 95% by mass with respect to a total mass of components supplied to the mixing device,
a stirring circumferential speed during the stirring and mixing is 2.0 to 5.0 m/sec,
a viscosity of the composition, which is measured under a condition of a temperature of 25°C and a shear rate of 0.1 $sec^{-1}$, is 0.5 to 500 Pa s, and
a viscosity of the composition, which is measured under a condition of a temperature of 25°C and a shear rate of 10 $sec^{-1}$, is 0.01 to 100 Pa s.

(2) The method for producing a composition according to (1),
in which the stirring circumferential speed is 2.5 m/sec or more and less than 4.0 m/sec.
(3) The method for producing a composition according to (1) or (2),
in which the content of the magnetic particles is 82% to 90% by mass with respect to the total mass of the components supplied to the mixing device.
(4) The method for producing a composition according to any one of (1) to (3),

in which the magnetic particles include alloy particles having a volume-average particle diameter of 1 to 30 μm.

(5) The method for producing a composition according to any one of (1) to (4),
in which the magnetic particles include ferrite particles containing Ni and having a volume-average particle diameter of 5 to 55 μm.

(6) The method for producing a composition according to any one of (1) to (5),
in which one or more binder components selected from the group consisting of a resin and a resin precursor are further supplied to the stirring device.

(7) The method for producing a composition according to (6),
in which the binder component includes at least one of an epoxy compound or an oxetane compound.

(8) The method for producing a composition according to any one of (1) to (7),
in which the rheology control agent includes at least one selected from the group consisting of a polycarboxylic acid, a polycarboxylic acid anhydride, and an amide wax.

(9) A magnetic material formed of a composition which is produced by the method for producing a composition according to any one of (1) to (8).

(10) An electronic component comprising:
the magnetic material according to (9).

(11) The electronic component according to (10),
in which the electronic component is used as an inductor.

(12) The electronic component according to (10),
in which the electronic component is used as an antenna.

According to the present invention, it is possible to provide a method for producing a composition, with which a composition capable of forming a magnetic material exhibiting high magnetic permeability and low magnetic loss, and having excellent storage stability can be produced.

In addition, according to the present invention, it is possible to provide a magnetic material and an electronic component.

## BRIEF DESCRIPTION OF THE DRAWINGS

Fig. 1 is a schematic view showing one embodiment of a mixing device used in a method for producing a composition according to the present invention.

## DESCRIPTION OF THE PREFERRED EMBODIMENTS

Hereinafter, the present invention will be described in detail.

Description of configuration requirements described below may be made on the basis of representative embodiments of the present invention in some cases, but the present invention is not limited to such embodiments.

In notations for a group (atomic group) in the present specification, in a case where the group is cited without specifying that it is substituted or unsubstituted, the group includes both a group having no substituent and a group having a substituent as long as it does not impair the spirit of the present invention. For example, an "alkyl group" includes not only an alkyl group having no substituent (unsubstituted alkyl group), but also an alkyl group having a substituent (substituted alkyl group).

"Actinic rays" or "radiation" in the present specification means, for example, a bright line spectrum of a mercury lamp, far ultraviolet rays typified by an excimer laser, extreme ultraviolet rays (EUV light), X-rays, electron beams (EB), or the like. "Light" in the present specification means actinic ray or radiation.

Unless otherwise specified, "exposure" in the present specification encompasses not only exposure by a bright line spectrum of a mercury lamp, far ultraviolet rays typified by an excimer laser, extreme ultraviolet rays, X-rays, EUV light, or the like, but also drawing by corpuscular beam such as electron beam and ion beam.

In the present specification, a numerical range expressed using "to" is used in a meaning of a range that includes the preceding and succeeding numerical values of "to" as the lower limit value and the upper limit value, respectively.

In the present specification, "solid content" of a composition means components forming a magnetic material. Therefore, in a case where the composition contains a solvent (such as an organic solvent and water), the "solid content" means all the components excluding the solvent. In a case where the components are components which form the magnetic material, the components are considered to be solid content even in a case where the components are liquid components.

In addition, in the present specification, a weight-average molecular weight (Mw) is a value by a gel permeation chromatography (GPC) method in terms of polystyrene.

In addition, in the present specification, for each component, unless otherwise specified, one kind of substance

corresponding to each component may be used alone, or two or more kinds thereof may be used in combination. Here, in a case where two or more kinds of substances corresponding to respective components are used in combination, the content of the components indicates the total content of the substances used in combination unless otherwise specified.

A feature point of the method for producing a composition according to the embodiment of the present invention is that components are mixed and stirred at a predetermined stirring circumferential speed. In a case where magnetic particles are mixed and stirred with a predetermined amount of a material to be stirred at a predetermined stirring circumferential speed, dispersibility of the magnetic particles is improved, and as a result, a composition exhibiting desired characteristics is obtained. For example, in a case where the stirring circumferential speed is too low, the dispersibility of the magnetic particles in the composition is deteriorated, and thus the desired characteristics cannot be obtained in a magnetic material formed of such a composition. In addition, in a case where the stirring circumferential speed is too high, over-dispersion in which the magnetic particles dispersed in the composition re-aggregate occurs, and the desired characteristics cannot be obtained in a magnetic material formed of such a composition.

The method for producing a composition according to the embodiment of the present invention includes a step of obtaining a composition by supplying, to a mixing device, magnetic particles, an organic solvent, and a rheology control agent to be stirred and mixed.

Hereinafter, first, the procedure of the present step will be described in detail, and the materials used will be described in detail later.

Fig. 1 is a schematic view showing one embodiment of the mixing device used in the method for producing a composition according to the present invention.

A mixing device 10 includes at least a mixing tank 12 and a stirrer 14.

At least the magnetic particles, the organic solvent, and the rheology control agent are supplied to the mixing tank 12, and thus the mixing tank 12 accommodates a mixture containing the magnetic particles, the organic solvent, and the rheology control agent.

Thereafter, the mixture accommodated in the mixing tank 12 is stirred and mixed with the stirrer 14 to produce a composition.

A content of the magnetic particles is 80% to 95% by mass with respect to the total mass of components supplied to the mixing tank 12. That is, the content of the magnetic particles is 80% to 95% by mass with respect to the total mass of the components supplied to the mixing device. In a case where the content of the magnetic particles is less than 80% by mass, the content of other components excluding the magnetic particles (particularly, the organic solvent) is increased, and as a result, storage stability of the magnetic particles is deteriorated. In a case where the content of the magnetic particles is more than 95% by mass, dispersibility of the magnetic particles in the composition is deteriorated, and as a result, characteristics of the magnetic material are deteriorated.

Among these, from the viewpoint that at least one effect of more excellent magnetic permeability of the magnetic material formed of the composition, lower magnetic loss of the magnetic material, or more excellent storage stability of the composition (more suppressed separation of the magnetic particles and the organic solvent during storage) (hereinafter, also simply referred to as "from the viewpoint that the effect of the present invention is more excellent"), the above-described content of the magnetic particles is preferably 82% to 90% by mass.

The above-described components supplied to the mixing device are components used for forming the composition, and include at least the magnetic particles, the organic solvent, and the rheology control agent. As will be described later, in a case of supplying a component other than the magnetic particles, the organic solvent, and the rheology control agent (for example, a binder component) to the mixing device, the total mass of the components supplied to the mixing device means the total mass of the magnetic particles, the organic solvent, the rheology control agent, and other components.

A content of the organic solvent with respect to the total mass of the components supplied to the mixing device is not particularly limited, but from the viewpoint that the effect of the present invention is more excellent, it is preferably 3% to 15% by mass and more preferably 5% to 10% by mass.

A content of the rheology control agent with respect to the total mass of components supplied to the mixing device is not particularly limited, but from the viewpoint that the effect of the present invention is more excellent, it is preferably 0.1% to 10% by mass, more preferably 0.5% to 5% by mass, and still more preferably 0.5% to 3% by mass.

The mixing tank 12 is not particularly limited as long as it is a tank (container) having a function of accommodating each component contained in the composition, and examples thereof include known mixing tanks.

A shape of a body part of the mixing tank 12 is not particularly limited, and examples thereof include a circular cylindrical shape, an elliptical cylindrical shape, and a square cylindrical shape. Among these, a circular cylindrical shape or an elliptical cylindrical shape is preferable.

A shape of a bottom part of the mixing tank 12 is not particularly limited, and examples thereof include a dish-shaped mirror plate shape, an elliptical mirror plate shape, a flat mirror plate shape, and a conical mirror plate shape.

The mixing tank 12 may have a material inlet port for charging various materials into the mixing tank.

In addition, the mixing tank 12 may have a gas introduction port for introducing a gas into the inside thereof, or may

have a gas discharge port for discharging the gas inside the mixing tank to the outside thereof.

The mixing device 10 includes the stirrer 14 having a function of stirring and mixing the components accommodated in the mixing tank 12.

The stirrer 14 includes a rotatable stirring shaft 16 and a plurality of stirring blades 18 attached to the stirring shaft.

The stirring shaft 16 extends from the outside of the mixing tank 12 to the inside of the mixing tank 12, and is rotatably attached to the outside of the mixing tank 12 to a driving source (for example, a motor) (not shown). The stirring shaft 16 is rotated by the driving source in a direction indicated by R, whereby the stirring blade 18 moves along a circumferential direction of the stirring shaft 16, and each component charged into the mixing tank 12 is stirred and mixed.

In Fig. 1, the number of the stirring blades 18 is described as four, but the number thereof is not particularly limited and may be four or more.

A type of the stirring blade 18 is not limited to the aspect of Fig. 1, and examples thereof include a propeller type and a dissolver type.

In the present invention, the stirring circumferential speed during the stirring and mixing is 2.0 to 5.0 m/sec, and from the viewpoint that at least one effect of more excellent magnetic permeability of the magnetic material formed of the composition or lower magnetic loss of the magnetic material is obtained, it is preferably 2.5 m/sec or more and less than 4.0 m/sec.

The above-described stirring circumferential speed means a stirring circumferential speed at a distal end of the stirring blade. The distal end of the stirring blade means an end part of the stirring blade on a side opposite to the stirring shaft, and in Fig. 1, a distal end 20 corresponds to the distal end of the stirring blade.

In addition, the above-described stirring circumferential speed can be adjusted, for example, by setting a set value of the stirring circumferential speed in the mixing device to a predetermined value. Therefore, in a case where the set value of the stirring circumferential speed in the mixing device is set within the above-described range to perform the mixing and stirring, it is considered that the stirring and mixing is performed at the above-described stirring circumferential speed.

A temperature (ambient temperature) during the stirring and mixing at the above-described stirring circumferential speed is not particularly limited, and from the viewpoint that the effect of the present invention is more excellent, it is preferably 15°C to 30°C and more preferably 20°C to 25°C.

A treatment time of the stirring and mixing at the above-described stirring circumferential speed is not particularly limited, but from the viewpoint that the effect of the present invention is more excellent, it is preferably 0.5 to 3 hours and more preferably 0.5 to 2 hours.

The composition obtained by the above-described stirring and mixing contains at least the magnetic particles, the organic solvent, and the rheology control agent.

In a case where a component (for example, a binder component) other than those described above are supplied to the mixing device, the obtained composition also contains other components.

The viscosity of the composition obtained by the above-described production method, which is measured under a condition of a temperature of 25°C and a shear rate of 0.1 $sec^{-1}$, is 0.5 to 500 Pa s, and from the viewpoint of more excellent storage stability of the composition, it is preferably 1 to 300 Pa·s.

In addition, the viscosity of the composition obtained by the above-described production method, which is measured under a condition of a temperature of 25°C and a shear rate of 10 $sec^{-1}$, is 0.01 to 100 Pa·s, and from the viewpoint that at least one effect of more excellent magnetic permeability of the magnetic material formed of the composition or lower magnetic loss is obtained, it is preferably 0.05 to 50 Pa·s.

The above-described viscosity can be measured using a rheometer (MCR-102 (manufactured by Anton Paar GmbH)).

Ae content of the magnetic particles in the composition obtained by the above-described production method is the same as the above-described content of the magnetic particles with respect to the total mass of the components supplied to the mixing device. That is, the content of the magnetic particles in the composition is 80% to 95% by mass (preferably, 82% to 90% by mass) with respect to the total mass of the composition.

In addition, a content of the organic solvent in the composition obtained by the above-described production method is not particularly limited, but from the viewpoint that the effect of the present invention is more excellent, it is preferably 3% to 15% by mass and more preferably 5% to 10% by mass with respect to the total mass of the composition.

In addition, a content of the rheology control agent in the composition obtained by the above-described production method is not particularly limited, but from the viewpoint that the effect of the present invention is more excellent, it is preferably 0.1% to 10% by mass, more preferably 0.5% to 5% by mass, and still more preferably 0.5% to 3% by mass with respect to the total mass of the composition.

In a case where the composition contains a binder component, a content of the binder component in the composition obtained by the above-described production method is not particularly limited, but from the viewpoint that the effect of the present invention is more excellent, it is preferably 1% to 12% by mass and more preferably 3% to 8% by mass with respect to the total mass of the composition.

Hereinafter, the materials used in the method for producing a composition according to the embodiment of the

present invention will be described in detail.

<Magnetic particles>

In the method for producing a composition according to the embodiment of the present invention, the magnetic particles are used.

The magnetic particles usually contain a metal atom.

In the present specification, examples of the above-described metal atom also include metalloid atoms such as boron, silicon, germanium, arsenic, antimony, and tellurium.

The magnetic particles may contain the above-described metal atom as an alloy including a metal element, a metal oxide, a metal nitride, or a metal carbide.

The above-described metal atom is not particularly limited, but preferably includes at least one metal atom selected from the group consisting of Fe, Ni, and Co.

A content of the at least one metal atom selected from the group consisting of Fe, Ni, and Co (in the case where a plurality of metal atoms are contained, the total content thereof) is preferably 50% by mass or more, more preferably 60% by mass or more, and still more preferably 70% by mass or more with respect to the total mass of metal atoms in the magnetic particles. The upper limit value of the above-described content is not particularly limited, but for example, it is 100% by mass or less, preferably 98% by mass or less and more preferably 95% by mass or less.

The magnetic particles may contain a material other than Fe, Ni, and Co, and specific examples thereof include Al, Si, S, Sc, Ti, V, Cu, Y, Mo, Rh, Pd, Ag, Sn, Sb, Te, Ba, Ta, W, Re, Au, Bi, La, Ce, Pr, Nd, P, Zn, Sr, Zr, Mn, Cr, Nb, Pb, Ca, B, C, N, and O.

In a case where the magnetic particles contain a metal atom other than Fe, Ni, and Co, it is preferable that the magnetic particles further contain one or more selected from the group consisting of Si, Cr, B, and Mo.

A shape of the magnetic particles is not particularly limited and may be any of a plate shape, an elliptical shape, a spherical shape, or an amorphous shape, but from the viewpoint that the effect of the present invention is more excellent, a spherical shape is preferable.

As the magnetic particles, alloy particles are preferable.

From the viewpoint that the effect of the present invention is more excellent, the alloy particles preferably contain Fe.

Examples of the metal atom other than Fe in the alloy particles include Ni and Co.

In a case where the alloy particles contain Fe, a content of Fe is preferably 50% by mass or more, more preferably 60% by mass or more, and still more preferably 70% by mass or more with respect to the content of metal atoms in the alloy particles. The upper limit value of the above-described content is not particularly limited, but for example, it is 100% by mass or less, preferably 98% by mass or less and more preferably 95% by mass or less.

A volume-average particle diameter of the alloy particles is not particularly limited and usually 1 to 60 μm, and from the viewpoint that the effect of the present invention is more excellent, it is preferably 1 to 30 μm and more preferably 1 to 20 μm.

The volume-average particle diameter of the alloy particles is a so-called median diameter (D50), and can be obtained based on a particle size distribution curve representing a volume-based frequency distribution of the alloy particles, which is obtained by a laser diffraction scattering-type particle size distribution analyzer (for example, product "LA960N" manufactured by HORIBA, Ltd.).

Examples of the alloy particles include Fe-Co-based alloy particles (preferably, Permendur), Fe-Ni-based alloy particles (for example, Permalloy), Fe-Zr-based alloy particles, Fe-Mn-based alloy particles, Fe-Si-based alloy particles, Fe-Al-based alloy particles, Ni-Mo-based alloy particles (preferably, Supermalloy), Fe-Ni-Co-based alloy particles, Fe-Si-Cr-based alloy particles, Fe-Si-B-based alloy particles, Fe-Si-Al-based alloy particles (preferably, Sendust), Fe-Si-B-C-based alloy particles, Fe-Si-B-Cr-based alloy particles, Fe-Si-B-Cr-C-based alloy particles, Fe-Co-Si-B-based alloy particles, Fe-Si-B-Nb-based alloy particles, Fe nanocrystalline alloy particles, Fe-based amorphous alloy particles, and Co-based amorphous alloy particles. The above-described alloy may be amorphous.

As the magnetic particles, ferrite particles are also preferable.

In addition to Fe constituting the iron oxide, the ferrite particles preferably contain at least one metal atom selected from the group consisting of Ni, Mn, and Co, and from the viewpoint that the effect of the present invention is more excellent, it is more preferable that the ferrite particles contain an Ni atom.

In addition, the ferrite particles may contain a material other than Ni, Mn, Fe, and Co, and specific examples thereof include Al, Si, S, Sc, Ti, V, Cu, Y, Mo, Rh, Pd, Ag, Sn, Sb, Te, Ba, Ta, W, Re, Au, Bi, La, Ce, Pr, Nd, P, Zn, Sr, Zr, Cr, Nb, Pb, Ca, B, C, N, and O.

A volume-average particle diameter of the ferrite particles is not particularly limited and usually 1 to 60 μm, and from the viewpoint that the effect of the present invention is more excellent, it is preferably 5 to 55 μm and more preferably 10 to 50 μm.

The volume-average particle diameter of the ferrite particles is a so-called median diameter (D50), and can be obtained based on a particle size distribution curve representing a volume-based frequency distribution of the ferrite particles, which is obtained by a laser diffraction scattering-type particle size distribution analyzer (for example, product "LA960N" manufactured by HORIBA, Ltd.).

Examples of the ferrite particles include Ni ferrite, Mn ferrite, and spinel ferrite (preferably, Ni-Zn-based ferrite, Mn-Zn-based ferrite, or Fe-Mn-based ferrite).

The magnetic particles may be used alone or in combination of two or more kinds thereof.

In a case where two or more kinds of magnetic particles are used in combination, a combination of the ferrite particles and the alloy particles or a combination of the alloy particles and the alloy particles is preferable; a combination of the ferrite particles and the alloy particles is more preferable; and a combination of the alloy particles having a volume-average particle diameter of 1 to 30 μm and the ferrite particles containing Ni and having a volume-average particle diameter of 5 to 55 μm is still more preferable.

In addition, in a case where the ferrite particles and the alloy particles are used in combination as the magnetic particles, a content ratio (mass ratio; ferrite particles/alloy particles) is preferably 30/70 to 70/30 and more preferably 40/60 to 60/40.

In addition, in a case where the alloy particles (first alloy particles) and the alloy particles (second alloy particles) are used in combination as the magnetic particles, a content ratio (mass ratio; first alloy particles/second alloy particles) is preferably 30/70 to 70/30, and more preferably 40/60 to 60/40.

<Organic solvent>

In the method for producing a composition according to the embodiment of the present invention, the organic solvent is used.

A type of the organic solvent is not particularly limited, and examples thereof include an ester-based solvent (preferably, an acetate-based solvent), a ketone-based solvent, an alcohol-based solvent, an amide-based solvent, an ether-based solvent, and a hydrocarbon-based solvent.

The organic solvent may be used alone, or in combination of two or more kinds thereof.

A lower limit value of a boiling point of the organic solvent is preferably 55°C or higher, and from the viewpoint that the effect of the present invention is more excellent, it is more preferably 80°C or higher and still more preferably 100°C or higher. An upper limit value of the boiling point of the organic solvent is not particularly limited, but is preferably 400°C or lower.

Examples of the organic solvent include acetone (boiling point: 56°C), methyl ethyl ketone (boiling point: 79.6°C), ethanol (boiling point: 78.4°C), cyclohexane (boiling point: 80.8°C), ethyl acetate (boiling point: 77.1°C), ethylene dichloride (boiling point: 83.5°C), tetrahydrofuran (boiling point: 66°C), cyclohexanone (boiling point: 155.6°C), toluene (boiling point: 110°C), ethylene glycol monomethyl ether (boiling point: 124°C), ethylene glycol monoethyl ether (boiling point: 135°C), ethylene glycol dimethyl ether (boiling point: 84°C), propylene glycol monomethyl ether (boiling point: 120°C), propylene glycol monoethyl ether (boiling point: 132°C), acetylacetone (boiling point: 140°C), cyclopentanone (boiling point: 131°C), ethylene glycol monomethyl ether acetate (boiling point: 144.5°C), ethylene glycol ethyl ether acetate (boiling point: 145°C), ethylene glycol monoisopropyl ether (boiling point: 141°C), diacetone alcohol (boiling point: 166°C), ethylene glycol monobutyl ether acetate (boiling point: 192°C), 1,4-butanediol diacetate ("1,4-BDDA", boiling point: 232°C), 1,6-hexanediol diacetate ("1,6-HDDA", boiling point: 260°C), 1,3-butylene glycol diacetate ("1,3-BGDA", boiling point: 232°C), propylene glycol diacetate ("PGDA", boiling point: 190°C), glycerol triacetate (boiling point: 260°C), 3-methoxy-1-propanol (boiling point: 150°C), 3-methoxy-1-butanol (boiling point: 161°C), diethylene glycol monomethyl ether (boiling point: 194°C), diethylene glycol monoethyl ether (boiling point: 202°C), diethylene glycol dimethyl ether (boiling point: 162°C), diethylene glycol diethyl ether (boiling point: 188°C), propylene glycol monomethyl ether acetate ("PGMEA", boiling point: 146°C), propylene glycol monoethyl ether acetate (boiling point: 146°C), N,N-dimethylformamide (boiling point: 153°C), dimethyl sulfoxide (boiling point: 189°C), γ-butyrolactone (boiling point: 204°C), ethyl acetate (boiling point: 77.1°C), butyl acetate (boiling point: 126°C), methyl lactate (boiling point: 144°C), N-methyl-2-pyrrolidone (boiling point: 202°C), and ethyl lactate (boiling point: 154°C).

<Rheology control agent>

In the method for producing a composition according to the embodiment of the present invention, the rheology control agent is used.

The rheology control agent is a component which imparts thixotropic properties to the composition, in which high viscosity is exhibited in a case where a shearing force (shear rate) is low and low viscosity is exhibited in a case where a shear force (shear rate) is high.

The rheology control agent may be used alone or in combination of two or more kinds thereof.

Examples of the rheology control agent include an organic rheology control agent and an inorganic rheology control agent, and an organic rheology control agent is preferable.

(Organic rheology control agent)

Examples of the organic rheology control agent include a compound having one or more (preferably two or more) adsorptive groups and further having a steric repulsive structural group.
The adsorptive group interacts with the surface of the magnetic particles to adsorb the organic rheology control agent to the surface of the magnetic particles.
Examples of the above-described adsorptive group include an acid group, a basic group, and an amide group.
Examples of the acid group include a carboxy group, a phosphoric acid group, a sulfo group, a phenolic hydroxyl group, and an acid anhydride group thereof (an acid anhydride group of a carboxy group or the like), and from the viewpoint that the effect of the present invention is more excellent, a carboxy group is preferable.
Examples of the basic group include an amino group (a group obtained by removing one hydrogen atom from ammonia, a primary amine, or a secondary amine) and an imino group.
Among these, as the adsorptive group, a carboxy group or an amide group is preferable, and a carboxy group is more preferable.
Since the steric repulsive structural group has a sterically bulky structure, steric hindrance is introduced into the magnetic particles to which the organic rheology control agent is adsorbed, and an appropriate space is maintained between the magnetic particles. As the steric repulsive structural group, for example, a chain-like group is preferable, a long-chain fatty acid group is more preferable, and a long-chain alkyl group is still more preferable.
It is also preferable that the organic rheology control agent has a hydrogen-bonding unit.
The hydrogen-bonding unit is a partial structure which functions to construct a hydrogen-bonding network between the organic rheology control agents and between the organic rheology control agent and other components. The organic rheology control agent contributing to the formation of the network may or may not be adsorbed to the surface of the magnetic particles.
The hydrogen-bonding unit may be the same as or different from the above-described adsorptive group. In a case where the hydrogen-bonding unit is the same as the above-described adsorptive group, a part of the above-described adsorptive group is bonded to the surface of the magnetic particles, and another part functions as the hydrogen-bonding unit.
As the hydrogen-bonding unit, a carboxy group or an amide group is preferable. The carboxy group as the hydrogen-bonding unit is preferable from the viewpoint that the carboxy group is easily incorporated into a curing reaction in a case of producing a cured product, and the amide group is preferable from the viewpoint that temporal stability of the precursor composition is more excellent.
The organic rheology control agent is preferably one or more selected from the group consisting of a polycarboxylic acid (a compound having two or more carboxy groups), a polycarboxylic acid anhydride (a compound having two or more acid anhydride groups composed of carboxy groups), and an amide wax.
These compounds may be a resin or may be other than a resin.
In addition, these compounds may correspond to an aggregation control agent and/or an aggregation dispersant, which will be described later.
Examples of the organic rheology control agent include modified urea, urea-modified polyamide, fatty acid amide, polyurethane, polyamide amide, a polymer urea derivative, and salts thereof (carboxylic acid salts and the like).
The modified urea is a reaction product of an isocyanate monomer or an adduct thereof with an organic amine. The modified urea is modified with a polyoxyalkylene polyol (polyoxyethylene polyol, polyoxypropylene polyol, or the like) and/or an alkyd chain or the like. The urea-modified polyamide is, for example, a compound having a urea bond and a compound having a moderate polar group or a low polar group introduced at a terminal. Examples of the moderate polar group or the low polar group include a polyoxyalkylene polyol (polyoxyethylene polyol, polyoxypropylene polyol, or the like) and an alkyd chain. The fatty acid amide is a compound having a long-chain fatty acid group and an amide group in the molecule.
These compounds may be a resin or may be other than a resin.
In addition, these compounds may correspond to an aggregation control agent and/or an aggregation dispersant, which will be described later.
A molecular weight (in a case of having a molecular weight distribution, a weight-average molecular weight) of the organic rheology control agent is preferably in a range of 200 to 50,000.
In a case where the organic rheology control agent has an acid value, the acid value is preferably 5 to 400 mgKOH/g.
In a case where the organic rheology control agent has an amine acid value, the amine value is preferably 5 to 300 mgKOH/g.

. Aggregation control agent

Examples of the organic rheology control agent also include an aggregation control agent. The aggregation control agent may be a resin or may be other than a resin.

The aggregation control agent has a function of being bonded to an aggregate having a relatively high density, such as the magnetic particles, and on the other hand, of dispersing a component such as the reactive monomer in the composition, thereby making it possible to produce a bulky aggregate.

Examples of the aggregation control agent include a cellulose derivative.

Examples of the cellulose derivative include carboxymethyl cellulose, methyl cellulose, hydroxyethyl cellulose, hydroxypropyl cellulose, hydroxypropylmethyl cellulose, hydroxypropylethyl cellulose, and salts thereof.

· Aggregation dispersant

Examples of the organic rheology control agent also include an aggregation dispersant.

The aggregation dispersant may be a resin or may be a substance other than a resin.

The aggregation dispersant has a function of being adsorbed on the surface of the magnetic particles, maintaining a distance between the magnetic particles at a certain level or more due to interaction between the dispersants while separating the magnetic particles from each other, and preventing the magnetic particles from being directly aggregated. As a result, aggregation of the magnetic particles is suppressed, and an aggregate having a relatively low density is formed even in a case where the aggregate is formed. The aggregation dispersant can further disperse components such as the reactive monomer in the composition to form a bulky aggregate, and thus the re-dispersibility can be improved.

As the aggregation dispersant, an alkylolammonium salt of a polybasic acid is preferable.

The polybasic acid may have two or more acid groups, and examples thereof include acidic polymers including a repeating unit having an acid group (for example, polyacrylic acid, polymethacrylic acid, polyvinyl sulfonic acid, and polyphosphoric acid). In addition, examples of the polybasic acid other than those described above include polymers obtained by polymerizing an unsaturated fatty acid such as crotonic acid. The alkylolammonium salt of a polybasic acid is obtained by reacting these polybasic acids with alkylolammonium. The salt obtained by such a reaction usually includes the following partial structure.

$$-C(=O)-N(-R^1)(-R^2-OH)$$

Here, $R^1$ is an alkyl group and $R^2$ is an alkylene group.

As the alkylolammonium salt of a polybasic acid, a polymer including a plurality of the above-described partial structures is preferable. In a case where the alkylolammonium salt of a polybasic acid is a polymer, a weight-average molecular weight is preferably 1,000 to 100,000 and more preferably 5,000 to 20,000. The polymer of the alkylolammonium salt of a polybasic acid is bonded to the surface of the magnetic particles and forms a hydrogen bond with another aggregation dispersant molecule such that the main chain structure of the polymer enters between the magnetic particles, and thus the magnetic particles can be separated from each other.

Examples of one suitable aspect of the aggregation dispersant include an amide wax which is a condensate obtained by a dehydration condensation of (a) saturated aliphatic monocarboxylic acids and hydroxy group-containing aliphatic monocarboxylic acids, (b) at least one acid of the polybasic acids, and (c) at least one amine of diamines and tetramines.

It is preferable that (a) to (c) are used such that a molar ratio of (a):(b):(c) is 1 to 3:0 to 5: 1 to 6.

The number of carbon atoms in the saturated aliphatic monocarboxylic acids is preferably 12 to 22. Specific examples thereof include lauric acid, myristic acid, pentadecyl acid, palmitic acid, margaric acid, stearic acid, nonadecanoic acid, arachidic acid, and behenic acid.

The number of carbon atoms in the hydroxy group-containing aliphatic monocarboxylic acids is preferably 12 to 22. Specific examples thereof include 12-hydroxystearic acid and dihydroxystearic acid.

These saturated aliphatic monocarboxylic acids and hydroxy group-containing aliphatic monocarboxylic acids may be used alone or in combination of two or more kinds thereof.

The polybasic acid is preferably a carboxylic acid which is a dicarboxylic acid or higher and has 2 to 12 carbon atoms, and more preferably a dicarboxylic acid.

Examples of such a dicarboxylic acid include aliphatic dicarboxylic acids such as oxalic acid, malonic acid, succinic acid, glutaric acid, adipic acid, pimelic acid, suberic acid, azelaic acid, sebacic acid, 1,10-decanedicarboxylic acid, and 1,12-dodecanedicarboxylic acid; aromatic dicarboxylic acids such as phthalic acid, isophthalic acid, and terephthalic acid; and alicyclic dicarboxylic acids such as 1,2-cyclohexanedicarboxylic acid, 1,3-cyclohexanedicarboxylic acid, 1,4-cyclohexanedicarboxylic acid, and cyclohexylsuccinic acid.

These polybasic acids may be used alone or in combination of two or more kinds thereof.

The number of carbon atoms in the diamines is preferably 2 to 14. Specific examples thereof include ethylenediamine, 1,3-propanediamine, 1,4-butanediamine, hexamethylenediamine, metaxylenediamine, tolylenediamine, paraxylenediamine, phenylenediamine, isophoronediamine, 1,10-decanediamine, 1,12-dodecanediamine, 4,4-diaminodicyclohexyl methane, and 4,4-diaminodiphenyl methane.

The number of carbon atoms in the tetramines is preferably 2 to 14. Specific examples thereof include butane-1,1,4,4-tetramine, and pyrimidine-2, 4,5,6-tetramine.

These diamines and tetramines may be used alone or in combination of two or more thereof.

Amounts of the diamines and the tetramines are adjusted according to the number of moles of the saturated aliphatic monocarboxylic acid or the hydroxy group-containing aliphatic monocarboxylic acid and the number of moles of the polybasic acids, so that the total number of carboxy groups and the total number of amino groups are equivalent. For example, in a case of n mol (n = 0 to 5) of an aliphatic dicarboxylic acid which is the polybasic acids with respect to 2 mol of an aliphatic monocarboxylic acid, and the diamines is (n + 1) mol, the acid and the amine are equivalent.

The amide wax may be obtained as a mixture of a plurality of compounds having different molecular weights. The amide wax is preferably a compound represented by Chemical Formula (I). The amide wax may be a single compound or a mixture.

$$A\text{-}C\text{-}(B\text{-}C)_m\text{-}A \ldots \qquad (I)$$

In Formula (I), A is a dehydrated residual group of the saturated aliphatic monocarboxylic acid and/or the hydroxy group-containing saturated aliphatic monocarboxylic acid, B is a dehydrated residual group of the polybasic acid, C is a dehydrogenated residual group of the diamine and/or the tetramine, and m is $0 \leq m \leq 5$.

Examples of one suitable aspect of the aggregation dispersant include a compound represented by Formula (II).

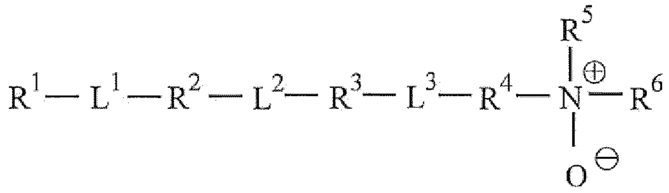

(II)

In Formula (II), $R^1$ represents a monovalent linear aliphatic hydrocarbon group having 10 to 25 carbon atoms, $R^2$ and $R^3$ each independently represent a divalent aliphatic hydrocarbon group having 2, 4, 6, or 8 carbon atoms, a divalent alicyclic hydrocarbon group having 6 carbon atoms, or a divalent aromatic hydrocarbon group, $R^4$ represents a divalent aliphatic hydrocarbon group having 1 to 8 carbon atoms, and $R^5$ and $R^6$ each independently represent a monovalent aliphatic hydrocarbon group having 1 to 3 carbon atoms or a hydroxyalkyl ether group.

In Formula (II), $L^1$ to $L^3$ each independently represent an amide bond, and in a case where $L^1$ and $L^3$ are each -CONH-, $L^2$ is -NHCO-, and in a case where $L^1$ and $L^3$ are each -NHCO-, $L^2$ is -CONH-.

$R^1$ is a monovalent linear aliphatic hydrocarbon group having 10 to 25 carbon atoms, and examples thereof include a linear alkyl group such as a decyl group, a lauryl group, a myristyl group, a pentadecyl group, a stearyl group, a palmityl group, a nonadecyl group, an eicosyl group, and a behenyl group; a linear alkenyl group such as a decenyl group, a pentadecenyl group, an oleyl group, and an eicosenyl group; and a linear alkynyl group such as a pentadecynyl group, an octadecynyl group, and a nonadecinyl group.

Among these, $R^1$ is preferably a monovalent linear aliphatic hydrocarbon group having 14 to 25 carbon atoms, and more preferably a monovalent linear aliphatic hydrocarbon group having 18 to 21 carbon atoms. The linear aliphatic hydrocarbon group is preferably an alkyl group.

Examples of the divalent aliphatic hydrocarbon group having 2, 4, 6, or 8 carbon atoms in $R^2$ and $R^3$ include an ethylene group, an n-butylene group, an n-hexylene group, and an n-octylene group.

Examples of the divalent alicyclic hydrocarbon group having 6 carbon atoms in $R^2$ and $R^3$ include a 1,4-cyclohexylene group, a 1,3-cyclohexylene group, and a 1,2-cyclohexylene group.

Examples of the divalent aromatic hydrocarbon group in $R^2$ and $R^3$ include an arylene group having 6 to 10 carbon atoms, such as a 1,4-phenylene group, a 1,3-phenylene group, and a 1,2-phenylene group.

Among these, from the viewpoint that an effect of improving viscosity is excellent, $R^2$ and $R^3$ are each preferably a divalent aliphatic hydrocarbon group having 2, 4, 6, or 8 carbon atoms, more preferably a divalent aliphatic hydrocarbon group having 2, 4, or 6 carbon atoms, still more preferably a divalent aliphatic hydrocarbon group having 2 or 4 carbon atoms, and particularly preferably a divalent aliphatic hydrocarbon group having 2 carbon atoms. The divalent aliphatic

hydrocarbon group is preferably a linear alkylene group.

$R^4$ represents a divalent aliphatic hydrocarbon group having 1 to 8 carbon atoms, and among these, from the viewpoint that the effect of improving viscosity is excellent, a linear or branched alkylene group is preferable, and a linear alkylene group is more preferable.

In addition, the number of carbon atoms in the divalent aliphatic hydrocarbon group in $R^4$ is 1 to 8, and from the viewpoint that the effect of improving viscosity is excellent, it is preferably 1 to 7, more preferably 3 to 7, still more preferably 3 to 6, and particularly preferably 3 to 5.

Accordingly, $R^4$ is preferably a linear or branched alkylene group having 1 to 8 carbon atoms, more preferably a linear alkylene group having 1 to 7 carbon atoms, still more preferably a linear alkylene group having 3 to 7 carbon atoms, particularly preferably a linear alkylene group having 3 to 6 carbon atoms, and most preferably a linear alkylene group having 3 to 5 carbon atoms.

Examples of the monovalent aliphatic hydrocarbon group having 1 to 3 carbon atoms in $R^5$ and $R^6$ include a linear or branched alkyl group having 1 to 3 carbon atoms, such as a methyl group, an ethyl group, a propyl group, and an isopropyl group; a linear or branched alkenyl group having 2 or 3 carbon atoms, such as a vinyl group, a 1-methylvinyl group, and a 2-propenyl group; and a linear or branched alkynyl group having 2 or 3 carbon atoms, such as an ethynyl group and a propynyl group.

Examples of the hydroxyalkyl ether group in $R^5$ and $R^6$ include a mono- or di(hydroxy) $C_{1-3}$ alkyl ether group such as a 2-hydroxyethoxy group, a 2-hydroxypropoxy group, and a 2,3-dihydroxypropoxy group.

Among these, $R^5$ and $R^6$ are each independently preferably a monovalent aliphatic hydrocarbon group having 1 to 3 carbon atoms, more preferably a linear or branched alkyl group having 1 to 3 carbon atoms, still more preferably a linear alkyl group having 1 to 3 carbon atoms, and particularly preferably a methyl group.

As the compound represented by Formula (II), compounds represented by Formulae (II-1) to (II-9) are preferable.

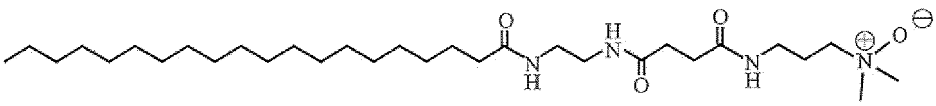 (II-1)

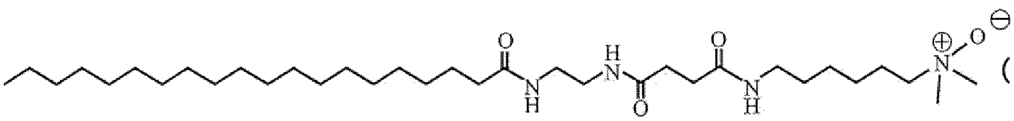 (II-2)

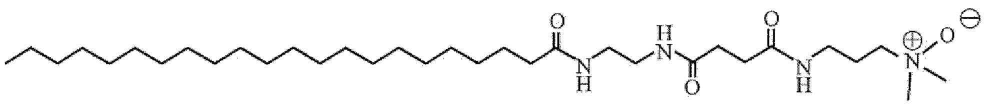 (II-3)

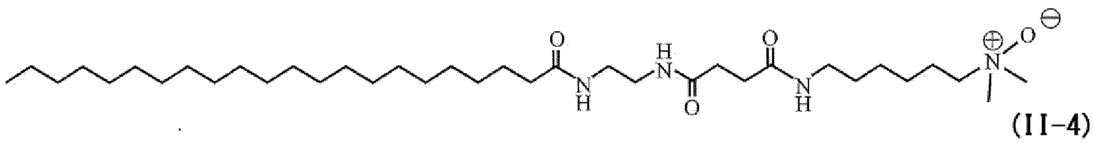

(II-4)

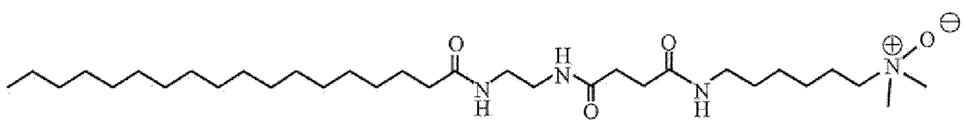 (II-5)

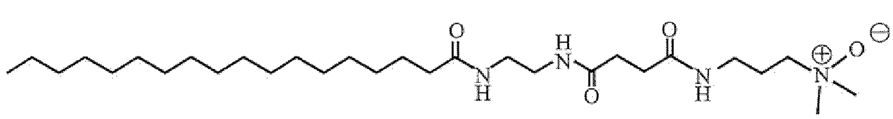 (II-6)

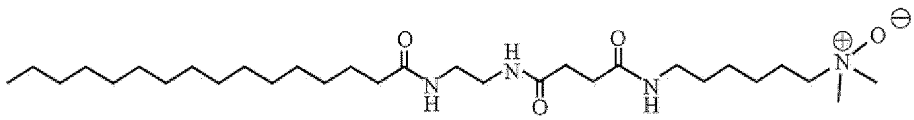 (II-7)

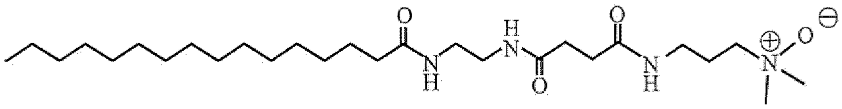

(II-8)

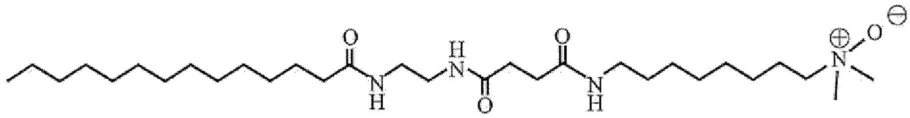

(II-9)

Examples of the aggregation dispersant include ANTI-TERRA-203, 204, 206, and 250 (all trade names, manufactured by BYK-Chemie GmbH); ANTI-TERRA-U (trade name, manufactured by BYK-Chemie GmbH); DISPER BYK-102, 180, and 191 (all trade names, manufactured by BYK-Chemie GmbH); BYK-P105 (trade name, manufactured by BYK-Chemie GmbH); TEGO Disper 630 and 700 (all trade names, manufactured by Evonik Degussa Japan Co., Ltd.); Talen VA-750B (trade name, manufactured by KYOEISHA CHEMICAL CO., LTD.); and FLOWNON RCM-300TL and RCM-230 AF (trade name, manufactured by KYOEISHA CHEMICAL CO., LTD., amide wax).

(Inorganic rheology control agent)

Examples of the inorganic rheology control agent include bentonite, silica, calcium carbonate, and smectite.

<Binder component>

In the method for producing a composition according to the embodiment of the present invention, a binder component selected from the group consisting of a resin and a resin precursor may be used.

The binder component is a component different from the above-described rheology control agent (thixotropic agent).

The binder component may be a resin itself, or may be a precursor of the resin (resin precursor).

The resin precursor is a component capable of forming a resin by undergoing polymerization and/or crosslinking through a predetermined curing treatment with heat, light (such as ultraviolet light), or the like.

Examples of the resin precursor include a curable compound such as a thermosetting compound and a photocurable compound. In a case where the composition contains the resin precursor as the binder component, it is preferable that the composition further contains a curing agent and/or a curing accelerator, which will be described later.

From the viewpoint that the effect of the present invention is more excellent, the binder component preferably includes at least one of an epoxy compound or an oxetane compound. The epoxy compound means a compound having one or more epoxy groups in the molecule, and the oxetane compound means a compound having one or more oxetanyl groups in the molecule.

Examples of a suitable aspect of the binder component include a (meth)acrylic resin, an epoxy resin, an ene-thiol resin, a polycarbonate resin, a polyether resin, a polyarylate resin, a polysulfone resin, a polyethersulfone resin, a polyphenylene resin, a polyarylene ether phosphine oxide resin, a polyimide resin, a polyamidoimide resin, a polyolefin resin, a cyclic olefin resin, a polyester resin, a styrene resin, and a phenoxy resin.

The resin may be used alone or in combination of two or more kinds thereof.

Examples of the epoxy resin include an epoxy resin which is a glycidyl etherified product of a phenol compound, an epoxy resin which is a glycidyl etherified product of various novolac resins, an alicyclic epoxy resin, an aliphatic epoxy resin, a heterocyclic epoxy resin, a glycidyl ester-based epoxy resin, a glycidyl amine-based epoxy resin, an epoxy resin obtained by glycidylating halogenated phenols, a condensate of a silicon compound having an epoxy group and another silicon compound, and a copolymer of a polymerizable unsaturated compound having an epoxy group and another polymerizable unsaturated compound.

In addition, examples of a commercially available product of the epoxy resin include MARPROOF G-0150M, G-0105SA, G-0130SP, G-0250SP, G-1005S, G-1005SA, G-1010S, G-2050M, G-01100, or G-01758 (manufactured by NOF Corporation; an epoxy group-containing polymer).

From the viewpoint of improving heat resistance, as the cyclic olefin resin, a norbomene resin is preferable. Examples of a commercially available product of the norbomene resin include ARTON series (for example, ARTON F4520) manufactured by JSR Corporation.

Examples of a commercially available product of the polyvinyl acetal resin include "KS-1" manufactured by SEKISUI CHEMICAL CO., LTD.

Examples of a commercially available product of the phenoxy resin include "YX7553BH30" (manufactured by Mitsubishi Chemical Corporation).

In addition, examples of a suitable aspect of the binder component also include resins described in Examples of WO2016/088645A.

In addition, examples of a suitable aspect of the binder component also include a resin which has an ethylenically unsaturated group (for example, a (meth)acryloyl group) in a side chain and in which a main chain and the ethylenically unsaturated group are bonded to each other through a divalent linking group to form an alicyclic structure.

Examples of a suitable aspect of the binder component also include the epoxy compound and the oxetane compound described above.

Examples of the compound having an epoxy group or an oxetanyl group include a polymer having an epoxy group in a side chain and a polymerizable monomer or oligomer having two or more epoxy groups in the molecule; and specific examples thereof include a bisphenol A-type epoxy resin, a bisphenol F-type epoxy resin, a phenol novolac-type epoxy resin, a cresol novolac-type epoxy resin, and an aliphatic epoxy resin.

As these resins, commercially available products may be used, or an epoxy group may be introduced into a side chain of a polymer.

With regard to commercially available products thereof, for example, the description in paragraph 0191 and the like of JP2012-155288A can be referred to, the contents of which are incorporated herein by reference.

In addition, examples thereof also include ADEKA RESIN EP-4000S, EP-40035, EP-4010S, and EP-40115 (all of which are manufactured by ADEKA CORPORATION); NC-2000, NC-3000, NC-7300, XD-1000, EPPN-501, and EPPN-502 (all of which are manufactured by ADEKA CORPORATION); and JER1031S.

In addition, specific examples of the bisphenol A-type epoxy resin and the bisphenol F-type epoxy resin include ZX1059 (manufactured by NIPPON STEEL Chemical & Material Co., Ltd.) and 828US (manufactured by Mitsubishi Chemical Corporation).

Furthermore, examples of a commercially available product of the phenol novolac-type epoxy resin include JER-157S65, JER-152, JER-154, and JER-157S70 (all of which are manufactured by Mitsubishi Chemical Corporation).

In addition, examples of the polymerizable monomer or oligomer having two or more epoxy groups in the molecule also include ZX1658GS (liquid 1,4-glycidyl cyclohexane-type epoxy resin, manufactured by NIPPON STEEL Chemical & Material Co., Ltd.), HP-4700 (naphthalene-type tetrafunctional epoxy resin, manufactured by DIC Corporation), NC3000L (biphenyl-type epoxy resin, manufactured by Nippon Kayaku Co., Ltd.), or the like.

Specific examples of the polymer having an oxetanyl group in the side chain and the polymerizable monomer or oligomer having two or more oxetanyl groups in the molecule include ARON OXETANE OXT-121, OXT-221, OX-SQ, and PNOX (all of which are manufactured by Toagosei Co., Ltd).

In addition, examples of a suitable aspect of the binder component also include a resin having an acid group, a basic group, or an amide group. The resin having an acid group, a basic group, or an amide group is suitable from the viewpoint that the resin easily exhibits a function as a dispersant for dispersing the magnetic particles and the effect of the present invention is more excellent.

Examples of the acid group include a carboxy group, a phosphoric acid group, a sulfo group, and a phenolic hydroxyl group, and from the viewpoint that the effect of the present invention is more excellent, a carboxy group is preferable.

Examples of the basic group include an amino group (a group obtained by removing one hydrogen atom from ammonia, a primary amine, or a secondary amine) and an imino group.

Examples of a suitable aspect of the binder component also include a compound (hereinafter, also simply referred to as "ethylenically unsaturated compound") which includes a group (hereinafter, also referred to as "ethylenically unsaturated group") including an ethylenically unsaturated bond. A molecular weight (weight-average molecular weight) of the ethylenically unsaturated compound is preferably 2,000 or less.

As the ethylenically unsaturated compound, a compound including one or more ethylenically unsaturated bonds is preferable, a compound including two or more ethylenically unsaturated bonds is more preferable, a compound including three or more ethylenically unsaturated bonds is still more preferable, and a compound including five or more ethylenically unsaturated bonds is particularly preferable. The upper limit is, for example, 15 or less. Examples of the ethylenically unsaturated group include a vinyl group, a (meth)allyl group, and a (meth)acryloyl group.

Examples of the ethylenically unsaturated compound include dipentaerythritol triacrylate (as a commercially available product, KAYARAD D-330; manufactured by Nippon Kayaku Co., Ltd.), dipentaerythritol tetraacrylate (as a commercially available product, KAYARAD D-320; manufactured by Nippon Kayaku Co., Ltd.), dipentaerythritol penta(meth)acrylate (as a commercially available product, KAYARAD D-310; manufactured by Nippon Kayaku Co., Ltd.), and dipentaerythritol hexa(meth)acrylate (as a commercially available product, KAYARAD DPHA; manufactured by Nippon Kayaku Co., Ltd., and A-DPH-12E; manufactured by Shin-Nakamura Chemical Co., Ltd.). Oligomer types thereof can also be used.

In addition, examples thereof also include NK ESTER A-TMMT (pentaerythritol tetraacrylate, manufactured by Shin-Nakamura Chemical Co., Ltd.), and KAYARAD RP-1040, KAYARAD DPEA-12LT, KAYARAD DPHA LT, KAYARAD RP-3060, and KAYARAD DPEA-12 (all trade names, manufactured by Nippon Kayaku Co., Ltd.).

The ethylenically unsaturated compound may have an acid group such as a carboxylic acid group, a sulfonic acid group, and a phosphoric acid group. The ethylenically unsaturated compound including an acid group is preferably an ester of an aliphatic polyhydroxy compound and an unsaturated carboxylic acid, more preferably an ethylenically unsaturated compound having an acid group by reacting a nonaromatic carboxylic acid anhydride with an unreacted hydroxyl group of an aliphatic polyhydroxy compound, and still more preferably a compound in which the aliphatic polyhydroxy compound in the ester is pentaerythritol and/or dipentaerythritol. Examples of a commercially available product include ARONIX TO-2349, M-305, M-510, and M-520 manufactured by Toagosei Co., Ltd.
In a case of supplying the binder component described later to the mixing device, a content of the binder component with respect to the total mass of the components supplied to the mixing device is not particularly limited, but from the viewpoint that the effect of the present invention is more excellent, it is preferably 1% to 12% by mass and more preferably 3% to 8% by mass.

<Curing agent>

In the method for producing a composition according to the embodiment of the present invention, a curing agent may be used. In particular, in a case where the above-described epoxy compound and/or oxetane compound is used, it is preferable to use the curing agent in combination.
Examples of the curing agent include a phenol-based curing agent, a naphthol-based curing agent, an acid anhydride-based curing agent, an active ester-based curing agent, a benzoxazine-based curing agent, a cyanate ester-based curing agent, a carbodiimide-based curing agent, and an amine adduct-based curing agent.
The curing agent may be used alone or in combination of two or more kinds thereof.
In a case of supplying the curing agent to the mixing device, a content of the curing agent with respect to the total mass of the components supplied to the mixing device is not particularly limited, but from the viewpoint that the effect of the present invention is more excellent, it is preferably 0.05% to 2% by mass and more preferably 0.1% to 1% by mass.

<Curing accelerator>

In the method for producing a composition according to the embodiment of the present invention, a curing accelerator may be used. In particular, in a case where the above-described compound having an epoxy group and/or an oxetanyl group is used, it is preferable to use the curing accelerator in combination.
Examples of the curing accelerator include triphenylphosphine, methyltributylphosphonium dimethyl phosphate, tris-ortho-tolylphosphine, and a boron trifluoride amine complex. Examples of a commercially available product of the phosphate-based curing accelerator include HISHICOLIN PX-4MP (manufactured by Nippon Chemical Industrial CO., LTD.).
The curing accelerator may be used alone or in combination of two or more kinds thereof.
In a case of supplying the curing accelerator to the mixing device, a content of the curing accelerator with respect to the total mass of the components supplied to the mixing device is not particularly limited, but from the viewpoint that the effect of the present invention is more excellent, it is preferably 0.05% to 2% by mass and more preferably 0.1% to 1% by mass.

<Polymerization initiator>

In the method for producing a composition according to the embodiment of the present invention, a polymerization initiator may be used. In particular, in a case where the above-described ethylenically unsaturated compound is used, it is preferable to use the polymerization initiator in combination.
The polymerization initiator is not particularly limited, and known polymerization initiators can be used. Examples of the polymerization initiator include a photopolymerization initiator and a thermal polymerization initiator.
The polymerization initiator may be used alone or in combination of two or more kinds thereof.
In a case of supplying the polymerization initiator to the mixing device, a content of the polymerization initiator with respect to the total mass of the components supplied to the mixing device is not particularly limited, but from the viewpoint that the effect of the present invention is more excellent, it is preferably 0.1% to 5% by mass and more preferably 0.5% to 3% by mass.

<Adhesion aid>

In the method for producing a composition according to the embodiment of the present invention, an adhesion aid may be used.
As the adhesion aid, a silane coupling agent is preferable.

Examples of the silane coupling agent include N-phenyl-3-aminopropyltrimethoxysilane, phenyltrimethoxysilane, N-(2-aminoethyl)3-aminopropylmethyldimethoxysilane, N-(2-aminoethyl)3-aminopropylmethyltrimethoxysilane, 3-aminopropyltriethoxysilane, 3-mercaptopropyltrimethoxy silane, vinyltrimethoxysilane, N-(2-(vinylbenzylamino)ethyl)3-aminopropyltrimethoxysilane hydrochloride, 3-methacryloxypropyltrimethoxy silane, 3-chloropropylmethyldimethoxy silane, and 3-chloropropyltrimethoxysilane.

Examples of a commercially available product of the silane coupling agent include KBM series, KBE series, and the like (for example, KBM-573 and KBM-103) manufactured by Shin-Etsu Chemical Co., Ltd.

The silane coupling agent may be used alone or in combination of two or more kinds thereof.

In a case of supplying the adhesion aid to the mixing device, a content of the adhesion aid with respect to the total mass of the components supplied to the mixing device is not particularly limited, but from the viewpoint that the effect of the present invention is more excellent, it is preferably 0.05% to 2% by mass and more preferably 0.1% to 1% by mass.

<Silicone oil>

In the method for producing a composition according to the embodiment of the present invention, a silicone oil may be used.

A viscosity of the silicone oil at 25°C is preferably 1 to 10,000 cSt.

Examples of the silicone oil include silicone oils manufactured by Momentive Performance Materials Inc. (for example, TSF431, TSF433, TSF437, TSF451 series, and the like); silicone oils manufactured by Shin-Etsu Chemical Co., Ltd. (for example, KF96L series, KF96 series, KF69 series, KF99 series, KF50 series, KF54 series, KF410 series, KF412 series, KF414 series, FL series, KF-6000, KF-6001, KF-6002, KF-6003, X-22-4039, PAM-E, KF-8010, KF-8012, KF-8008, KF-4917, X-22-163, and the like); silicone oils manufactured by Dow Corning Toray Co., Ltd. (for example, BY16-846 series, SF8416 series, SH200 series, SH203 series, SH230 series, SF8419 series, FS1265 series, SH510 series, SH550 series, SH710 series, FZ-2110 series, FZ-2203 series, BY16-201, and the like); and manufactured by Wacker AsahiKasei Silicone Co., Ltd. (for example, AK series, AKF series, L series, W series, AP series, AR series, AS series).

The silicone oil may be used alone or in combination of two or more kinds thereof.

In a case of supplying the silicone oil to the mixing device, a content of the silicone oil with respect to the total mass of the components supplied to the mixing device is not particularly limited, but from the viewpoint that the effect of the present invention is more excellent, it is preferably 0.05% to 2% by mass and more preferably 0.1% to 1% by mass.

<Other components>

In the method for producing a composition according to the embodiment of the present invention, a component other than the above-described components (for example, a polymerization inhibitor, a sensitizer, a co-sensitizer, a surfactant, a plasticizer, an oil sensitizing agent, a filler, a rubber component, an antifoaming agent, a flame retardant, a peeling accelerator, an antioxidant, a fragrance, a surface tension adjuster, a chain transfer agent, and the like) may be used.

<Applications>

The composition produced by the method for producing a composition according to the embodiment of the present invention can be suitably used as a hole-filling composition for a hole portion such as a via hole and a through-hole, provided on a circuit board. Examples of one specific procedure for filling holes include a method including the following steps 1 to 3.

Step 1: step of coating a substrate provided with a hole portion such as a via hole and a through-hole with the composition by a known coating method such as a slit coating method, an ink jet method, a spin coating method, a cast coating method, a roll coating method or a screen printing method such that the hole portion is filled with the composition

Step 2: step of heating the composition in the substrate undergone the step 1 at approximately 120°C to 180°C for approximately 30 to 90 minutes such that thermosetting components in the composition are cured

Step 3: step of removing unnecessary portions of the magnetic material obtained in the step 2 sticking out of a surface of the substrate by physical polishing such that the substrate has a flat surface

The circuit board including the above-described magnetic material is suitably used, for example, as an electronic component such as an antenna or an inductor provided in an electronic communication device or the like.

In addition, it is also preferable that the composition is formed into a film shape.

From the viewpoint of more excellent magnetic permeability, a film thickness of the film formed of the composition is preferably 1 to 10,000 μm, more preferably 10 to 1,000 μm, and still more preferably 15 to 800 μm.

The film formed of the composition is suitably used, for example, as an electronic component such as an antenna or an inductor provided in an electronic communication device or the like.

<Magnetic material>

The magnetic material (magnetic particle-containing material) according to the embodiment of the present invention is formed of the above-described composition. In a case where the composition contains the above-described resin precursor, the magnetic material includes a cured product of the resin precursor.
A shape of the magnetic material is not particularly limited, and may be, for example, a shape suitable for the shape of the hole portion provided in the substrate or a film shape as described above.
As an example of a specific aspect of a method for manufacturing the magnetic material, a method for manufacturing the magnetic material in a case where the composition is applied as a hole-filling composition has been described in the above section, but hereinafter, as another example of the specific aspect, an example of a method for manufacturing a film-like magnetic material (hereinafter, also referred to as "magnetic particle-containing film") will be described.

(Method for manufacturing magnetic particle-containing film)

The magnetic particle-containing film is formed of the above-described composition.
The method for manufacturing the magnetic particle-containing film is not particularly limited, and is preferably a manufacturing method including the following steps. In a case where the following method for manufacturing the magnetic particle-containing film is performed, the composition contains a curable resin precursor.

· Composition layer forming step
· Curing Step

In the composition layer forming step, the composition is applied onto a substrate (support) or the like to form a layer (composition layer) of the composition. As the substrate, for example, a wiring board having an antenna unit or an inductor unit can be used.
As a method of applying the composition onto the substrate, various coating methods such as a slit coating method, an ink jet method, a spin coating method, a cast coating method, a roll coating method, and a screen printing method can be adopted. A film thickness of the composition layer is preferably 1 to 10,000 μm, more preferably 10 to 1,000 μm, and still more preferably 15 to 800 μm. The composition layer applied onto the substrate may be heated (pre-baked), and the pre-baking is performed, for example, with a hot plate, an oven, or the like at a temperature of 50°C to 140°C for 10 to 1800 seconds.
The curing step is not particularly limited as long as the composition layer can be cured, and examples thereof include a heating treatment for heating the composition layer and an exposure treatment for irradiating the composition layer with an actinic ray or radiation.
In a case where the heating treatment is performed, the heating treatment can be performed continuously or batchwise using a heating unit such as a hot plate, a convection oven (hot air circulation dryer), and a high-frequency heater.
A heating temperature in the heating treatment is preferably 120°C to 260°C and more preferably 150°C to 240°C. A heating time is not particularly limited, but is preferably 10 to 1800 seconds.
The pre-baking in the composition layer forming step may also serve as the heating treatment in the curing step.
In a case where the exposure treatment is performed, the irradiation method of actinic ray or radiation is not particularly limited, but it is preferable to perform irradiation through a photo mask having a patterned opening portion.
The exposure is preferably performed by irradiation with radiation. The radiation which can be used for the exposure is preferably ultraviolet rays such as g-ray, h-ray, and i-ray, and a light source is preferably a high-pressure mercury lamp. The irradiation intensity is preferably 5 to 1,500 $mJ/cm^2$ and more preferably 10 to 1,000 $mJ/cm^2$.
In a case where the composition layer is heated in the exposure treatment, the exposure treatment may serve as a post-heating treatment described later.
In a case where the exposure treatment is performed in the curing step, a developing step may be further included.
The developing step is a step of developing the exposed composition layer described above to form the magnetic particle-containing film. By this step, the composition layer in a light-unirradiated portion in the exposure treatment is eluted, only a photocured portion remains, and a patterned magnetic particle-containing film is obtained.
A type of the developer used in the developing step is not particularly limited, but an alkali developer which does not cause damage to a circuit or the like is desirable.
The development temperature is 20°C to 30°C, for example.
The development time is, for example, 20 to 90 seconds. In recent years, in order to remove the residue better, the development may be performed for 120 to 180 seconds. Furthermore, in order to further improve residue removability, a

step of shaking off the developer every 60 seconds and supplying a fresh developer may be repeated several times.

The alkali developer is preferably an alkaline aqueous solution which is prepared by dissolving an alkaline compound in water so that the concentration thereof is 0.001% to 10% by mass (preferably 0.01% to 5% by mass).

In a case where the exposure treatment is performed in the curing step, it is preferable to perform a post-heating treatment (post-baking) after the curing step. The post-baking is a heating treatment to complete the curing.

<Electronic component>

The electronic component according to the embodiment of the present invention includes the above-described magnetic material. That is, the electronic component according to the embodiment of the present invention may include the above-described magnetic material as a part of the component. Examples of the electronic component include an inductor and an antenna. As the electronic component, an electronic component having a known structure can be used.

Examples

Hereinafter, the present invention will be described in more detail with reference to Examples. The materials, the amounts of materials used, the proportions, the treatment details, the treatment procedure, and the like shown in Examples below may be appropriately modified as long as the modifications do not depart from the spirit of the present invention. Therefore, the scope of the present invention should not be construed as being limited to Examples.

In the following description, unless otherwise specified, "%" means "% by mass" and "part" means "part by mass".

<Various components used for preparing composition>

Respective components described in the table below were prepared in for preparing a composition. Each component described in the table below is shown below.

(Magnetic particles)

Table 1 shows magnetic particles used. All of P-1 to P-12 had a concentration of solid contents of 100% by mass.

In Table 1, the column of "Ferrite or alloy" indicates whether the magnetic particles were ferrite particles or alloy particles. "F" indicates that the magnetic particles were ferrite particles, and "A" indicates that the magnetic particles were alloy particles.

[Table 1]

| | Type | Ferrite or alloy | Volume-average particle diameter (μm) |
|---|---|---|---|
| P-1 | Fe-based amorphous alloy particles (AW2-08 PF-3F, manufactured by Epson Atmix Corporation) | A | 3 |
| P-2 | Fe-based amorphous alloy particles (KUA-MET6B2-53μm, manufactured by Epson Atmix Corporation) | A | 24 |
| P-3 | Fe-based amorphous alloy particles (KUA-MET6B2-150μm, manufactured by Epson Atmix Corporation) | A | 50 |
| P-4 | Fe nanocrystalline alloy particles (KUAMET NC1, manufactured by Epson Atmix Corporation) | A | 3 |
| P-5 | Fe nanocrystalline alloy particles (KUAMET NC1, manufactured by Epson Atmix Corporation) | A | 16 |
| P-6 | FeSiCr alloy particles (EA-SMP-10 PF-5F, manufactured by Epson Atmix Corporation) | A | 4 |
| P-7 | FeSiCr alloy particles (EA-SMP-10 PF-20F, manufactured by Epson Atmix Corporation) | A | 10 |
| P-8 | Ni-Zn-based ferrite particles | F | 3 |
| P-9 | Ni-Zn-based ferrite particles | F | 10 |

(continued)

| | Type | Ferrite or alloy | Volume-average particle diameter (μm) |
|---|---|---|---|
| P-10 | Ni-Zn-based ferrite particles | F | 40 |
| P-11 | Mn-Zn-based ferrite particles | F | 10 |
| P-12 | Mn-Zn-based ferrite particles | F | 40 |

(Organic solvent)

· S-1: PGMEA (manufactured by TOKYO CHEMICAL INDUSTRY CO., LTD.)

· S-2: 1,6-HDDA (manufactured by Daicel Corporation)

· S-3: glycerol triacetate (manufactured by FUJIFILM Wako Pure Chemical Corporation)

· S-4: cyclohexanone (manufactured by FUJIFILM Wako Pure Chemical Corporation)

<Rheology control agent>

· R-1: product name "FLOWNON RCM-230AF" (higher fatty acid amide (amide wax), manufactured by KYOEISHA CHEMICAL CO., LTD., contained solvent: butyl acetate/3-methoxy-3-methyl-1-butanol, paste, corresponding to the rheology control agent)

· R-2: product name "Talen VA750B" (higher fatty acid amide (amide wax), manufactured by KYOEISHA CHEMICAL CO., LTD., powder, corresponding to the rheology control agent)

· R-3: product name "BYK P-105" (unsaturated polycarboxylic acid polymer, manufactured by BYK-Chemie GmbH, containing maleic acid anhydride, liquid, corresponding to the rheology control agent)

(Binder component)

· B-1: compound shown below (weight-average molecular weight: 10,000) (concentration of solid contents: 100% by mass); a symbol (v, w, y, or z) attached to each repeating unit of the main chain represents a mass ratio, and a numerical value attached to the side chain represents a repetition number; v, w, y, and z represent a relationship of v/w/y/z = 40/10/40/10.

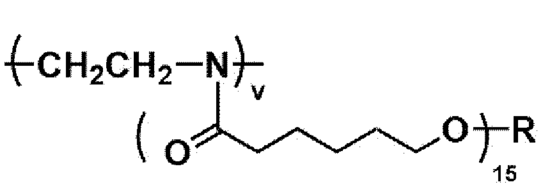

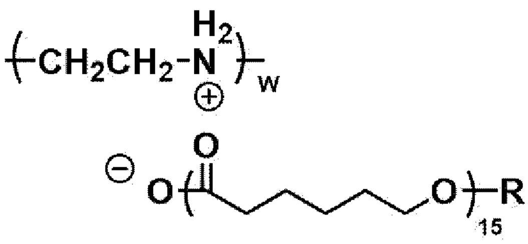

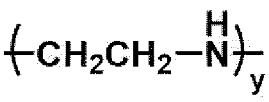

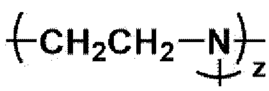

$R = CO^nC_7H_{15}, H$

· B-2: product name "CELLOXIDE 2021P" (manufactured by Daicel Corporation, corresponding to the epoxy

compound)

· B-3: product name "DENACOL EX-314" (manufactured by Nagase ChemteX Corporation, corresponding to the epoxy compound)

· B-4: product name "KAYARAD RP-1040" (manufactured by Nippon Kayaku Co., Ltd., corresponding to the ethylenically unsaturated compound)

(Other additives)

· A-1: product name "HISHICOLIN PX-4MP" (manufactured by Nippon Chemical Industrial CO., LTD., corresponding to an epoxy curing catalyst)

· A-2: product name "KBM-573" (manufactured by Shin-Etsu Chemical Co., Ltd., corresponding to a silane coupling agent)

· A-3: product name "KF6001" (manufactured by Shin-Etsu Chemical Co., Ltd., corresponding to a silicone oil)

<Preparation of compositions of Examples and Comparative Examples>

The respective component were charged into a mixing tank of a mixer device (EL1 type) manufactured by Nippon Eirich Co., Ltd., and stirred and mixed using the device at room temperature (25°C) for 1 hour such that a stirring circumferential speed during the stirring and mixing was a value in Table 2, thereby preparing a composition of each of Examples and Comparative Examples with the formulation (part by mass) shown in Tables 2 and 3.

As shown in Fig. 1, the mixer device was provided with a stirring blade attached to a stirring shaft in the mixing tank, and the above-described stirring circumferential speed was a circumferential speed at a distal end of the stirring blade.

<Evaluation>

(Viscosity evaluation of composition)

Using an MC102 (rheometer manufactured by Anton Paar GmbH), a viscosity (E1) of each of the compositions of Examples and Comparative Examples was measured under the condition of a temperature of 25°C and a shear rate of 0.1 $sec^{-1}$, a viscosity (E2) of each of the compositions of Examples and Comparative Examples was measured under the condition of a temperature of 25°C and a shear rate of 10 $sec^{-1}$, and the viscosities were evaluated.

Evaluation standard (viscosity (E1))

"A":

$$10\ \text{Pa·s} \geq E1 \geq 0.5\ \text{Pa·s}$$

"B":

$$500\ \text{Pa·s} \geq E1 > 10\ \text{Pa·s}$$

"C" :

$$0.5\ \text{Pa·s} > E1$$

"D":

$$E1 > 500\ \text{Pa·s}$$

Evaluation standard (viscosity (E2))

"A":

$$1 \text{ Pa}\cdot\text{s} \geq \text{E2} \geq 0.01 \text{ Pa}\cdot\text{s}$$

"B":

$$100 \text{ Pa}\cdot\text{s} \geq \text{E2} > 1 \text{ Pa}\cdot\text{s}$$

"C" :

$$0.01 \text{ Pa}\cdot\text{s} > \text{E2}$$

"D":

$$\text{E2} > 100 \text{ Pa}\cdot\text{s}$$

(Magnetic permeability and magnetic loss)

An Si wafer having a thickness of 100 μm was coated with CT4000 (manufactured by FUJIFILM Electronic Materials Co., Ltd.) to produce a substrate. Various compositions were applied onto the base substrate using an applicator having a gap of 100 μm to form a coating film, and the coating film was dried at 100°C for 120 seconds. Subsequently, the obtained coating film was heat-treated at 230°C for 15 minutes to completely cure the film.
The obtained substrate with a cured film was cut into pieces having a size of 1 cm × 2.8 cm, thereby producing a sample substrate for measurement.
Subsequently, by using PER-01 (manufactured by KEYCOM Corp., high-frequency magnetic permeability measuring device), magnetic properties (a magnetic permeability (μ') (H/m) and magnetic loss (tan δ) at 60 MHz) of the film in each of the obtained sample substrates for measurement were measured.

Evaluation standard (magnetic permeability)

"5":

$$20 < \mu'$$

"4":

$$18 < \mu' \leq 20$$

"3":

$$15 < \mu' \leq 18$$

"2":

$$10 < \mu' \leq 15$$

"1":

$$\mu' \leq 10$$

Evaluation standard (magnetic loss)

"5" :

$$0.05 > \tan\delta$$

"4":

$$0.07 > \tan\delta \geq 0.05$$

"3":

$$0.10 > \tan\delta \geq 0.07$$

"2":

$$0.15 > \tan\delta \geq 0.10$$

"1":

$$\tan\delta \geq 0.15$$

(Filling suitability evaluation)

An FR-4 substrate having a thickness of 0.8 mm was prepared, and through-holes having a diameter of 0.4 mm were formed.

Subsequently, by using DP-320 (NEWLONG SEIMITSU KOGYO Co., LTD.), the substrate was treated such that each of the compositions of Examples and Comparative examples was embedded in the through-holes. Next, the obtained substrate in which the composition had been embedded was heated at 160°C for 1 hour such that the composition was cured.

The obtained substrate was subjected to a polishing treatment to expose a cross section of the embedded portion, and the internal state was observed with a scanning electron microscope (SEM).

An image was obtained at n = 30, and a proportion of openings calculated by Image J was averaged and adopted as an indicator of embedding suitability. Based on the value (Va) obtained by averaging, filling suitability was evaluated by the following evaluation standard. As the value of Va is smaller, the openings caused by voids, cracks, and the like are fewer in the cured substance, which is preferable.

Evaluation standard of embedding suitability

"5" :

$$Va < 3\%$$

"4":

$$3\% \leq Va < 5\%$$

"3":

$$5\% \leq Va < 8\%$$

"2" :

$$8\% \leq Va < 15\%$$

"1":

$$15\% \leq Va,$$

or the composition had no fluidity and could not be filled.

(Storage stability)

A sample bottle made of glass (cylindrical bottle having a diameter of 23 mm and a height of 35 mm) was filled with 3 mL of each of the compositions of Examples and Comparative Examples, sealed, and then left to stand at 25°C for 6 months.

Thereafter, the composition in the sample bottle was visually observed, and a distance d1 between the gas-liquid interface and the interface between a transparent region and an opaque region and a distance d2 between the gas-liquid interface and the bottom surface of the sample bottle were measured.

Subsequently, the same sample bottle was stirred at 3,300 r/min for 30 seconds using a shaker Se-08 manufactured by TAITEC CORPORATION, and then left to stand at 25°C for 12 hours. Thereafter, the composition was visually observed, and a distance d'1 between the gas-liquid interface and the interface between a transparent region and an opaque region and a distance d'2 between the gas-liquid interface and the bottom surface of the sample bottle were measured.

Storage stability was evaluated based on the following standard using the distance d1 and the distance d2, and the distance d'1 and the distance d'2.

Evaluation standard (storage stability)

"5" :

$$0.1 \geq d1/d2 \geq 0 \text{ and } 0.1 \geq d1'/d2' \geq 0$$

(liquid did not completely separate over time)
"4":

$$0.2 \geq d1/d2 \geq 0.1 \text{ and } 0.1 \geq d1'/d2' \geq 0$$

(liquid slightly separated over time, but returned by stirring)
"3":

$$0.3 \geq d1/d2 \geq 0.2 \text{ and } 0.1 \geq d1'/d2' \geq 0$$

(the liquid separated over time, but returned by stirring)
"2":

$$0.3 < d1/d2 \text{ and } 0.1 \geq d1'/d2' \geq 0$$

(liquid significantly separated over time, but returned by stirring)
"1":

$$0.3 < d1/d2 \text{ and } d1'/d2' > 0.1$$

(liquid significantly separated over time and did not return even by stirring)

In Tables 2 and 3, "Content (part by mass)" of each component in the column of "Blending formulation of composition" indicates the blending amount (part by mass) of each component.

In Tables 2 and 3, the column of "Content of magnetic particles (% by mass)" indicates the content (used amount) (% by mass) of the magnetic particles with respect to the total components supplied to the mixing device.

In Tables 2 and 3, the column of "Stirring circumferential speed (m/sec)" indicates the stirring circumferential speed (m/sec) during the stirring and mixing.

In Tables 2 and 3, the column of "Viscosity (E1)" indicates the evaluation of the viscosity (E1) measured in (Viscosity evaluation of composition) described above.

In Tables 2 and 3, the column of "Viscosity (E2)" indicates the evaluation of the viscosity (E2) measured in (Viscosity evaluation of composition) described above.

[Table 2]

| | Blending formulation of composition | | | | | | | | | | Content of magnetic particles (% by mass) | Stirring circumferential speed (m/sec) | Viscosity of composition (Pa·s) | | Evaluation item | | | |
|---|---|---|---|---|---|---|---|---|---|---|---|---|---|---|---|---|---|---|
| | Magnetic particles | | Organic solvent | | Rheology control agent | | Binder component | | Additive | | | | | | | | | |
| | Type | Content by mass) | Type | Content (part by mass) | Type | Content (part by mass) | Type | Content by mass) | Type | Content (part by mass) | | | Viscosity (E1) | Viscosity (E2) | Magnetic permeability | Magnetic loss | Filling suitability | Storage stability |
| Example 1 | P-1 | 42 | S-1 | 8 | R-1 | 2 | B-3 | 6 | | | 84 | 3.5 | A | A | 4 | 5 | 4 | 5 |
| | P-9 | 42 | | | | | | | | | | | | | | | | |
| Example 2 | P-1 | 42 | S-1 | 8 | R-1 | 2 | B-3 | 6 | | | 84 | 3.5 | B | A | 5 | 4 | 4 | 4 |
| | P-10 | 42 | | | | | | | | | | | | | | | | |
| Example 3 | P-1 | 42 | S-1 | 8 | R-1 | 2 | B-3 | 6 | | | 84 | 3.5 | A | A | 3 | 4 | 4 | 5 |
| | P-11 | 42 | | | | | | | | | | | | | | | | |
| Example 4 | P-1 | 42 | S-1 | 8 | R-1 | 2 | B-3 | 6 | | | 84 | 3.5 | B | A | 4 | 4 | 4 | 4 |
| | P-12 | 42 | | | | | | | | | | | | | | | | |
| Example 5 | P-4 | 42 | S-1 | 8 | R-1 | 2 | B-3 | 6 | | | 84 | 3.5 | A | A | 4 | 5 | 4 | 5 |
| | P-9 | 42 | | | | | | | | | | | | | | | | |
| Example 6 | P-4 | 42 | S-1 | 8 | R-1 | 2 | B-3 | 6 | | | 84 | 3.5 | B | A | 5 | 4 | 4 | 4 |
| | P-10 | 42 | | | | | | | | | | | | | | | | |
| Example 7 | P-4 | 42 | S-1 | 8 | R-1 | 2 | B-3 | 6 | | | 84 | 3.5 | A | A | 3 | 4 | 4 | 5 |
| | P-11 | 42 | | | | | | | | | | | | | | | | |
| Example 8 | P-4 | 42 | S-1 | 8 | R-1 | 2 | B-3 | 6 | | | 84 | 3.5 | B | A | 4 | 4 | 4 | 4 |
| | P-12 | 42 | | | | | | | | | | | | | | | | |
| Example 9 | P-6 | 42 | S-1 | 8 | R-1 | 2 | B-3 | 6 | | | 84 | 3.5 | A | A | 4 | 5 | 4 | 5 |
| | P-9 | 42 | | | | | | | | | | | | | | | | |

(continued)

| | Blending formulation of composition | | | | | | | | | | Content of magnetic particles (% by mass) | Stirring circumferential speed (m/sec) | Viscosity of composition (Pa·s) | | Evaluation item | | | |
|---|---|---|---|---|---|---|---|---|---|---|---|---|---|---|---|---|---|---|
| | Magnetic particles | | Organic solvent | | Rheology control agent | | Binder component | | Additive | | | | | | | | | |
| | Type | Content by mass) | Type | Content (part by mass) | Type | Content (part by mass) | Type | Content by mass) | Type | Content (part by mass) | | | Viscosity (E1) | Viscosity (E2) | Magnetic permeability | Magnetic loss | Filling suitability | Storage stability |
| Example 10 | P-6 | 42 | S-1 | 8 | R-1 | 2 | B-3 | 6 | | | 84 | 3.5 | B | A | 5 | 4 | 4 | 4 |
| | P-1-0 | 42 | | | | | | | | | | | | | | | | |
| Example 11 | P-6 | 42 | S-1 | 8 | R-1 | 2 | B-3 | 6 | | | 84 | 3.5 | A | A | 3 | 4 | 4 | 5 |
| | P-11 | 42 | | | | | | | | | | | | | | | | |
| Example 12 | P-6 | 42 | S-1 | 8 | R-1 | 2 | B-3 | 6 | | | 84 | 3.5 | B | A | 4 | 4 | 4 | 4 |
| | P-1-2 | 42 | | | | | | | | | | | | | | | | |
| Example 13 | P-1 | 42 | S-1 | 8 | R-1 | 2 | B-3 | 6 | | | 84 | 3.5 | B | B | 5 | 4 | 4 | 4 |
| | P-2 | 42 | | | | | | | | | | | | | | | | |
| Example 14 | P-1 | 42 | S-1 | 8 | R-1 | 2 | B-3 | 6 | | | 84 | 3.5 | B | B | 4 | 3 | 3 | 3 |
| | P-3 | 42 | | | | | | | | | | | | | | | | |
| Example 15 | P-4 | 42 | S-1 | 8 | R-1 | 2 | B-3 | 6 | | | 84 | 3.5 | B | B | 5 | 4 | 4 | 4 |
| | P-5 | 42 | | | | | | | | | | | | | | | | |
| Example 16 | P-6 | 42 | S-1 | 8 | R-1 | 2 | B-3 | 6 | | | 84 | 3.5 | B | B | 4 | 3 | 4 | 5 |
| | P-7 | 42 | | | | | | | | | | | | | | | | |
| Example 17 | P-8 | 42 | S-1 | 8 | R-1 | 2 | B-3 | 6 | | | 84 | 3.5 | B | A | 4 | 4 | 4 | 4 |
| | P-2 | 42 | | | | | | | | | | | | | | | | |
| Example 18 | P-8 | 42 | S-1 | 8 | R-1 | 2 | B-3 | 6 | | | 84 | 3.5 | B | B | 3 | 4 | 4 | 4 |
| | P-1-0 | 42 | | | | | | | | | | | | | | | | |

[Table 3]

| | Blending formulation of composition | | | | | | | | | | Content of magnetic particles (% by mass) | Stirring circumferential speed (m/sec) | Viscosity of composition (Pa s) | | Evaluation item | | | |
|---|---|---|---|---|---|---|---|---|---|---|---|---|---|---|---|---|---|---|
| | Magnetic particles | | Organic solvent | | Rheology control agent | | Binder component | | Additive | | | | | | | | | |
| | Type | Content (part by mass) | Type | Content (part by mass) | Type | Content (part by mass) | Type | Content (part by mass) | Type | Content (part by mass) | | | Viscosity (E1) | Viscosity (E2) | Magnetic permeability | Magnetic loss | Filling suitability | Storage stability |
| Example 19 | P-1 | 42 | S-1 | 8 | R-2 | 2 | B-3 | 6 | | | 84 | 3.5 | B | A | 5 | 4 | 5 | 4 |
| | P-1-0 | 42 | | | | | | | | | | | | | | | | |
| Example 20 | P-1 | 42 | S-1 | 8 | R-3 | 2 | B-3 | 6 | | | 84 | 3.5 | B | B | 4 | 4 | 4 | 4 |
| | P-1-0 | 42 | | | | | | | | | | | | | | | | |
| Example 21 | P-1 | 42 | S-1 | 8 | R-2 | 1 | B-1 | 1 | | | 84 | 3.5 | B | B | 5 | 4 | 5 | 4 |
| | P-1-0 | 42 | | | | | B-3 | 6 | | | | | | | | | | |
| Example 22 | P-1 | 42 | S-1 | 8 | R-1 | 2 | B-2 | 6 | | | 84 | 3.5 | B | A | 5 | 4 | 4 | 4 |
| | P-1-0 | 42 | | | | | | | | | | | | | | | | |
| Example 23 | P-1 | 42 | S-1 | 8 | R-1 | 2 | B-4 | 6 | | | 84 | 3.5 | A | A | 5 | 4 | 4 | 4 |
| | P-1-0 | 42 | | | | | | | | | | | | | | | | |
| Example 24 | P-1 | 42 | S-1 | 8 | R-1 | 2 | B-3 | 5.5 | A-1 | 0.5 | 84 | 3.5 | B | A | 4 | 4 | 4 | 4 |
| | P-1-0 | 42 | | | | | | | | | | | | | | | | |
| Example 25 | P-1 | 42 | S-1 | 8 | R-1 | 2 | B-3 | 5.5 | A-2 | 0.5 | 84 | 3.5 | B | A | 4 | 4 | 4 | 4 |
| | P-1-0 | 42 | | | | | | | | | | | | | | | | |

(continued)

| | Blending formulation of composition | | | | | | | | | | Content of magnetic particles (% by mass) | Stirring circumferential speed (m/sec) | Viscosity of composition (Pa s) | | Evaluation item | | | |
|---|---|---|---|---|---|---|---|---|---|---|---|---|---|---|---|---|---|---|
| | Magnetic particles | | Organic solvent | | Rheology control agent | | Binder component | | Additive | | | | | | | | | |
| | Type | Content (part by mass) | Type | Content (part by mass) | Type | Content (part by mass) | Type | Content (part by mass) | Type | Content (part by mass) | | | Viscosity (E1) | Viscosity (E2) | Magnetic permeability | Magnetic loss | Filling suitability | Storage stability |
| Example 26 | P-1 | 42 | S-1 | 8 | R-1 | 2 | B-3 | 5.5 | A-3 | 0.5 | 84 | 3.5 | B | A | 4 | 4 | 4 | 4 |
| | P-1-0 | 42 | | | | | | | | | | | | | | | | |
| Example 27 | P-1 | 42 | S-2 | 8 | R-1 | 2 | B-3 | 6 | | | 84 | 3.5 | B | A | 4 | 4 | 4 | 4 |
| | P-1-0 | 42 | | | | | | | | | | | | | | | | |
| Example 28 | P-1 | 42 | S-3 | 8 | R-1 | 2 | B-3 | 6 | | | 84 | 3.5 | B | A | 5 | 4 | 4 | 4 |
| | P-1-0 | 42 | | | | | | | | | | | | | | | | |
| Example 29 | P-1 | 42 | S-4 | 8 | R-1 | 2 | B-3 | 6 | | | 84 | 3.5 | B | B | 4 | 4 | 4 | 4 |
| | P-1-0 | 42 | | | | | | | | | | | | | | | | |
| Example30 | P-1 | 40 | S-1 | 12 | R-1 | 2 | B-3 | 6 | | | 80 | 3.5 | A | A | 4 | 4 | 4 | 3 |
| | P-1-0 | 40 | | | | | | | | | | | | | | | | |
| Example 31 | P-1 | 46 | S-1 | 4 | R-1 | 1 | B-3 | 3 | | | 92 | 3.5 | B | B | 3 | 3 | 3 | 4 |
| | P-1-0 | 46 | | | | | | | | | | | | | | | | |
| Example 32 | P-1 | 42 | S-1 | 8 | R-1 | 2 | B-3 | 6 | | | 84 | 2.0 | B | B | 3 | 3 | 4 | 4 |
| | P-1-0 | 42 | | | | | | | | | | | | | | | | |

(continued)

| | Blending formulation of composition | | | | | | | | | | Content of magnetic particles (% by mass) | Stirring circumferential speed (m/sec) | Viscosity of composition (Pa s) | | Evaluation item | | | |
|---|---|---|---|---|---|---|---|---|---|---|---|---|---|---|---|---|---|---|
| | Magnetic particles | | Organic solvent | | Rheology control agent | | Binder component | | Additive | | | | | | | | | |
| | Type | Content (part by mass) | Type | Content (part by mass) | Type | Content (part by mass) | Type | Content (part by mass) | Type | Content (part by mass) | | | Viscosity (E1) | Viscosity (E2) | Magnetic permeability | Magnetic loss | Filling suitability | Storage stability |
| Example 33 | P-1 | 42 | S-4 | 8 | R-1 | 2 | B-3 | 6 | | | 84 | 5.0 | B | B | 4 | 3 | 4 | 4 |
| | P-1-0 | 42 | | | | | | | | | | | | | | | | |
| Comparative Example 1 | P-1 | 39 | S-1 | 14 | R-1 | 2 | B-3 | 6 | | | 78 | 3.5 | C | C | 3 | 4 | 3 | 1 |
| | P-1-0 | 39 | | | | | | | | | | | | | | | | |
| Comparative Example 2 | P-1 | 48 | S-1 | 2 | R-1 | 1 | B-3 | 1 | | | 96 | 3.5 | D | D | 2 | 1 | 2 | 4 |
| | P-1-0 | 48 | | | | | | | | | | | | | | | | |
| Comparative Example 3 | P-1 | 42 | S-1 | 8 | R-1 | 2 | B-3 | 6 | | | 84 | 1.0 | D | D | 2 | 2 | 2 | 4 |
| | P-1-0 | 42 | | | | | | | | | | | | | | | | |
| Comparative Example 4 | P-1 | 42 | S-1 | 8 | R-1 | 2 | B-3 | 6 | | | 84 | 6.0 | D | D | 3 | 2 | 2 | 4 |
| | P-1-0 | 42 | | | | | | | | | | | | | | | | |

As shown in Tables 2 and 3, the composition produced by the method for producing a composition according to the embodiment of the present invention exhibited the desired characteristics.

From the comparison between Example 13 and Example 14, it was confirmed that the characteristics were more excellent in a case of using the alloy particles having a volume average particle diameter of 1 to 30 μm.

In addition, from the comparison between Example 2 and Example 17, it was confirmed that the characteristics were more excellent in a case of using the ferrite particles containing Ni and having a volume-average particle diameter of 5 to 55 μm.

In addition, from the comparison between Example 17 and Example 18, it was confirmed that the characteristics were more excellent in a case of the combination of the alloy particles and the ferrite particles as compared with a case of the combination of the ferrite particles and the ferrite particles.

In addition, from the comparison of Examples 2, 30, and 31, it was confirmed that the characteristics were more excellent in a case where the content of the magnetic particles was 82% to 90% by mass with respect to the total mass of the components supplied to the mixing device.

In addition, from the comparison between Examples 2 and Example 32 and the comparison between Example 29 and Example 33, it was confirmed that the characteristics were more excellent in a case where the stirring circumferential speed was 2.5 m/sec or more and less than 4.0 m/sec.

Explanation of References

10: mixing device
12: mixing tank
14: mixer
16: stirring shaft
18: stirring blade
20: distal end

## Claims

**1.** A method for producing a composition, comprising:

a step of obtaining a composition by supplying, to a mixing device, magnetic particles, an organic solvent, and a rheology control agent to be stirred and mixed,
wherein a content of the magnetic particles is 80% to 95% by mass with respect to a total mass of components supplied to the mixing device,
a stirring circumferential speed during the stirring and mixing is 2.0 to 5.0 m/sec,
a viscosity of the composition, which is measured under a condition of a temperature of 25°C and a shear rate of 0.1 $sec^{-1}$, is 0.5 to 500 Pa s, and
a viscosity of the composition, which is measured under a condition of a temperature of 25°C and a shear rate of 10 $sec^{-1}$, is 0.01 to 100 Pa s.

**2.** The method for producing a composition according to claim 1,
wherein the stirring circumferential speed is 2.5 m/sec or more and less than 4.0 m/sec.

**3.** The method for producing a composition according to claim 1,
wherein the content of the magnetic particles is 82% to 90% by mass with respect to the total mass of the components supplied to the mixing device.

**4.** The method for producing a composition according to claim 1,
wherein the magnetic particles include alloy particles having a volume-average particle diameter of 1 to 30 μm.

**5.** The method for producing a composition according to claim 1,
wherein the magnetic particles include ferrite particles containing Ni and having a volume-average particle diameter of 5 to 55 μm.

**6.** The method for producing a composition according to claim 1,

wherein one or more binder components selected from the group consisting of a resin and a resin precursor are further supplied to the stirring device.

**7.** The method for producing a composition according to claim 6,
wherein the binder component includes at least one of an epoxy compound or an oxetane compound.

**8.** The method for producing a composition according to claim 1,
wherein the rheology control agent includes at least one selected from the group consisting of a polycarboxylic acid, a polycarboxylic acid anhydride, and an amide wax.

**9.** A magnetic material formed of a composition which is produced by the method for producing a composition according to any one of claims 1 to 8.

**10.** An electronic component comprising:
the magnetic material according to claim 9.

**11.** The electronic component according to claim 10,
wherein the electronic component is used as an inductor.

**12.** The electronic component according to claim 10,
wherein the electronic component is used as an antenna.

FIG. 1

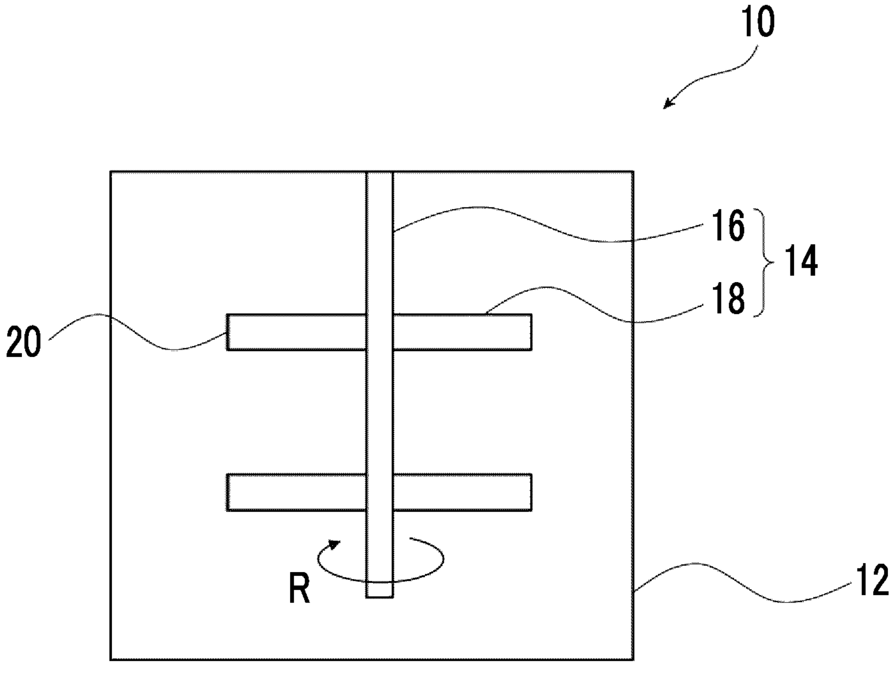

**INTERNATIONAL SEARCH REPORT**

International application No.
**PCT/JP2023/000906**

**A. CLASSIFICATION OF SUBJECT MATTER**

***H01F 1/28***(2006.01)i; ***B01F 23/57***(2022.01)i; ***B01F 27/80***(2022.01)i; ***B01F 27/90***(2022.01)i; ***B01F 27/91***(2022.01)i; ***C08J 3/215***(2006.01)i; ***C08K 3/01***(2018.01)i; ***C08K 3/08***(2006.01)i; ***C08K 3/10***(2018.01)i; ***C08K 3/22***(2006.01)i; ***C08L 63/00***(2006.01)i; ***C08L 71/02***(2006.01)i; ***C08L 101/00***(2006.01)i; ***H01F 1/37***(2006.01)i
FI: H01F1/28; B01F23/57; B01F27/80; B01F27/90; B01F27/91; C08J3/215 CEZ; C08K3/01; C08K3/08; C08K3/10; C08K3/22; C08L63/00 Z; C08L71/02; C08L101/00; H01F1/37

According to International Patent Classification (IPC) or to both national classification and IPC

**B. FIELDS SEARCHED**

Minimum documentation searched (classification system followed by classification symbols)

H01F1/28; B01F23/57; B01F27/80; B01F27/90; B01F27/91; C08J3/215; C08K3/01; C08K3/08; C08K3/10; C08K3/22; C08L63/00; C08L71/02; C08L101/00; H01F1/37

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/106752 A1 (DOWA ELECTRONICS MATERIALS CO., LTD.) 03 June 2021 (2021-06-03) | 1-12 |
| A | WO 2020/075745 A1 (AJINOMOTO CO., INC.) 16 April 2020 (2020-04-16) | 1-12 |
| A | JP 2008-251735 A (NIPPON ZEON CO LTD) 16 October 2008 (2008-10-16) | 1-12 |
| P, A | WO 2022/202394 A1 (FUJIFILM CORP ) 29 September 2022 (2022-09-29) | 1-12 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **28 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/000906**

| Patent document cited in search report | Publication date (day/month/year) | Patent family member(s) | Publication date (day/month/year) |
|---|---|---|---|
| WO 2021/106752 A1 | 03 June 2021 | JP 2021-85065 A<br>CN 114728334 A<br>KR 10-2022-0107027 A<br>TW 202127477 A | |
| WO 2020/075745 A1 | 16 April 2020 | US 2021/0225569 A1<br>EP 3866179 A1<br>CN 112805795 A<br>KR 10-2021-0069650 A<br>TW 202029230 A | |
| JP 2008-251735 A | 16 October 2008 | (Family: none) | |
| WO 2022/202394 A1 | 29 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017043749 A
- WO 2016088645 A
- JP 2012155288 A